# EUROPEAN PATENT APPLICATION

(11) **EP 4 773 227 A1**
(43) Date of publication of application: **08.07.2026**
(21) Application number: 24880891.7
(22) Date of filing: 04.02.2024
(51) Int. Cl.: H01M 4/36, H01M 4/60, H01M 4/505, H01M 4/525

(54) **POSITIVE ELECTRODE ACTIVE MATERIAL AND PREPARATION METHOD THEREFOR, POSITIVE ELECTRODE SHEET, BATTERY AND ELECTRIC DEVICE**

(30) Priority: 24.10.2023 CN 202311380418
(71) Applicant: Contemporary Amperex Technology Co., Limited, Ningde, Fujian 352100 (CN)
(72) Inventor: ZHANG, Xiaoli, Ningde, Fujian 352100 (CN); MA, Yating, Ningde, Fujian 352100 (CN); CAO, Junqi, Ningde, Fujian 352100 (CN)
(74) Representative: Ziebig Hengelhaupt Intellectual Property Attorneys Patentanwaltskanzlei PartGmbB
(86) International application number: PCT/CN2024/075839
(87) International publication number: WO 2025/086504

(57) **Abstract**

A positive electrode active material and a preparation method therefor, a positive electrode plate, a battery, and an electrical apparatus are disclosed. The positive electrode active material includes a transition metal oxide and a coating layer. The coating layer is coated on at least part of the surface of the transition metal oxide. The coating layer includes a silicon-containing polymer. The silicon-containing polymer is formed by polymerizing a silane monomer derivative containing a first group and polysiloxane containing a second group. The first group is reactive with the second group. The molecular weight of the silane monomer derivative is less than that of the polysiloxane.

## Description

### CROSS-REFERENCE TO RELATED APPLICATIONS

The present application claims the priority of Chinese patent application 202311380418.5 entitled "POSITIVE ELECTRODE ACTIVE MATERIAL AND PREPARATION METHOD THEREFOR, POSITIVE ELECTRODE PLATE, BATTERY, AND ELECTRICAL APPARATUS" and filed on October 24, 2023, which is incorporated herein by reference in its entirety.

### TECHNICAL FIELD

The present application relates to a positive electrode active material, a preparation method therefor, a positive electrode plate, a battery, and an electrical apparatus.

### BACKGROUND

Batteries have features such as a high capacity and a long service life, and therefore are widely applied to electronic devices, such as a mobile phone, a laptop, an electric bicycle, an electric automobile, an electric plane, an electric ship, an electric toy car, an electric toy ship, an electric toy plane, and an electric tool. Due to large progress made in battery cells, higher requirements are put forward for the performance of the batteries. To improve the performance of the batteries, materials such as positive electrode active materials in the batteries are usually optimized and improved.

However, when currently improved positive electrode active materials are applied to battery cells, the cycle life of the battery cells is relatively poor, and the DC internal resistance increases significantly.

### SUMMARY

The present application provides a positive electrode active material and a preparation method therefor, a positive electrode plate, a battery, and an electrical apparatus. The cycle performance and the DC internal resistance of the battery of the present application can be improved.

According to a first aspect, an embodiment of the present application provides a positive electrode active material. The positive electrode active material includes a transition metal oxide and a coating layer. The coating layer is coated on at least part of the surface of the transition metal oxide. The coating layer includes a silicon-containing polymer. The silicon-containing polymer is formed by polymerizing a silane monomer derivative containing a first group and polysiloxane containing a second group. The first group is reactive with the second group. The molecular weight of the silane monomer derivative is less than that of the polysiloxane.

Thus, in the positive electrode active material according to this embodiment of the present application, the coating layer is arranged on at least part of the surface of the transition metal oxide. Since a binding force between the coating layer and the transition metal oxide is relatively strong, the coating layer is not prone to detachment. The coating layer can protect the surface of the transition metal oxide well. In addition, since the coating layer contains silicon-oxide bonds, which can absorb hydrofluoridic acid (HF) in an electrolyte, the corrosion of the transition metal oxide by the electrolyte can be effectively relieved, thereby alleviating the issues of surface phase transition and oxygen release of the transition metal oxide, and further improving the structural stability of the transition metal oxide. Thus, when the positive electrode active material is applied to a battery cell, the cycle life of the battery cell can be prolonged, the DC resistance (DCR) can be reduced, and so on.

In some embodiments, the silane monomer derivative includes a compound represented by Formula (I): 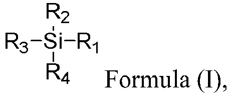 in Formula (I),
R₁, R₂, R₃ and R₄ each independently include at least one of a first group, a hydrogen atom, a halogen atom, substituted or unsubstituted C1-C6 alkyl, substituted or unsubstituted C2-C6 alkenyl, substituted or unsubstituted C2-C6 alkynyl and substituted or unsubstituted C6-C10 aryl, where at least one of R₁, R₂, R₃ and R₄ includes the first group.

Thus, when R₁, R₂, R₃ and R₄ according to this embodiment of the present application include the above-mentioned groups, a molecular chain of the silane monomer derivative is relatively short, thereby facilitating a reaction between the first group and the second group in the silane monomer derivative. A composite structure can be obtained through a cross-linking reaction that occurs between the first group and the second group. The introduction of the composite structure enables the formation of a relatively complete layered coating on the surface of transition metal oxide particles, thereby protecting the surface of the transition metal oxide particles. The Si-O bonds enriched in the coating layer can absorb the HF in the electrolyte, so that the corrosion by the electrolyte is effectively relieved, and the dissolution of metals in the transition metal oxide and surface phase transition can be relieved, thereby improving the cycle life and DCR increase of the positive electrode active material.

In some embodiments, R₁, R₂, R₃ and R₄ each independently include at least one of a first group, a hydrogen atom, a halogen atom, substituted or unsubstituted C1-C3 alkyl, substituted or unsubstituted C2-C4 alkenyl, substituted or unsubstituted C2-C4 alkynyl and substituted or unsubstituted C6-C8 aryl, where at least one of R₁, R₂, R₃ and R₄ includes the first group.

Thus, when R₁, R₂, R₃ and R₄ according to this embodiment of the present application include the above-mentioned groups, a molecular chain of the silane monomer derivative is relatively short, thereby facilitating the further improvement of the cycle life and DCR increase of the positive electrode active material.

In some embodiments, the first group includes at least one of substituted or unsubstituted C1-C6 alkoxyl, amino, carboxyl, hydroxyl, and an ester group. The above-mentioned first group has relatively high reactivity, thereby facilitating a reaction with the second group.

In some embodiments, the first group includes substituted or unsubstituted C1-C6 alkoxyl.

In some embodiments, the silane monomer derivative includes at least one of a compound represented compounds represented by Formula (I-1) to Formula (I-12),

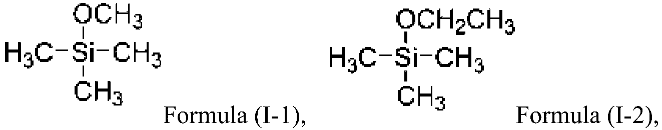

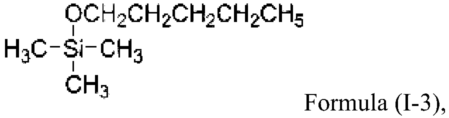

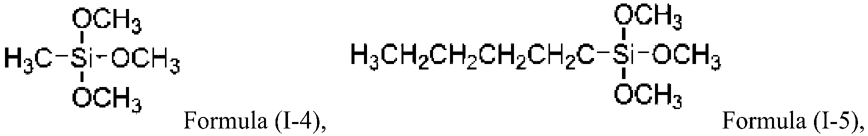

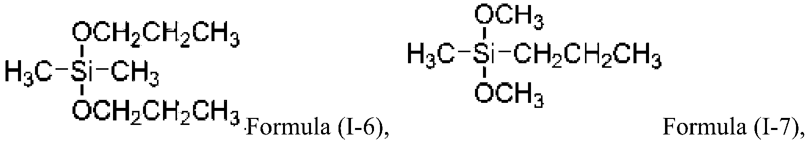

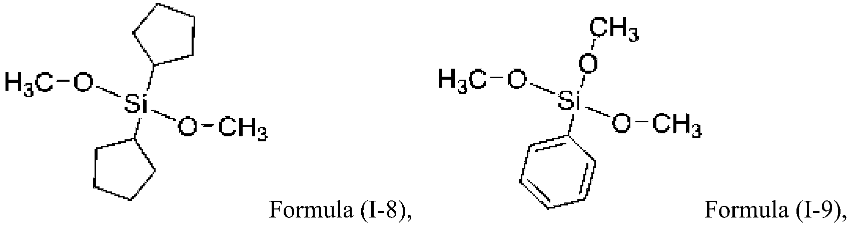

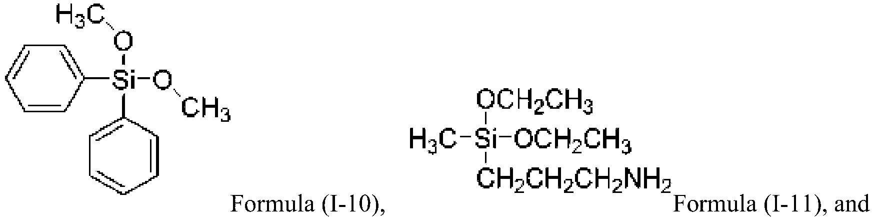

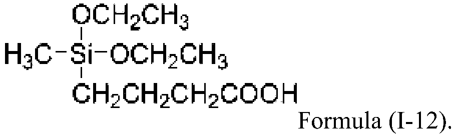

In some embodiments, the relative molecular mass of the silane monomer derivative is 65 to 400. The silane monomer derivative is a low-molecular-weight compound, which is more prone to binding to a transition metal oxide.

In some embodiments, the polysiloxane includes a compound represented by Formula (II): 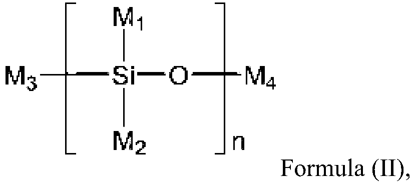 in Formula (II),
n represents degree of polymerization, and n is a positive integer selected from 2 to 50;
M₁, M₂, M₃ and M₄ each independently include at least one of a second group, a hydrogen atom, a halogen atom, substituted or unsubstituted C1-C6 alkyl, substituted or unsubstituted C2-C6 alkenyl, substituted or unsubstituted C2-C6 alkynyl and substituted or unsubstituted C6-C10 aryl, and at least one of M₁, M₂, M₃ and M₄ includes the second group;
Optionally, M₁, M₂, M₃ and M₄ each independently include at least one of a second group, a hydrogen atom, a halogen atom, substituted or unsubstituted C1-C3 alkyl, substituted or unsubstituted C2-C4 alkenyl, substituted or unsubstituted C2-C4 alkynyl and substituted or unsubstituted C6-C8 aryl; and
Further optionally, M₃ and M₄ each independently include a second group.

Thus, when M₁, M₂, M₃ and M₄ in this embodiment of the present application include the above-mentioned groups, molecular chains of a side chain and an end group of the polysiloxane are relatively short, thereby facilitating a reaction between the second group and the first group in the polysiloxane. A three-dimensional cross-linked network structure is obtained through a cross-linking composite reaction between functional groups.

In some embodiments, the second group includes at least one of hydroxyl, alkenyl, amino, an ether group, and a halogen atom. The above-mentioned second group has relatively high reactivity, thereby facilitating a reaction with the first group.

In some embodiments, the polysiloxane includes at least one of compounds represented by Formula (II-1) to Formula (II-6):

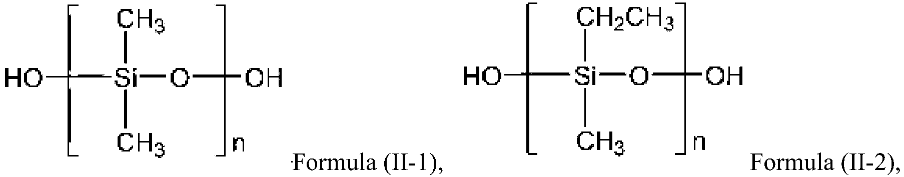

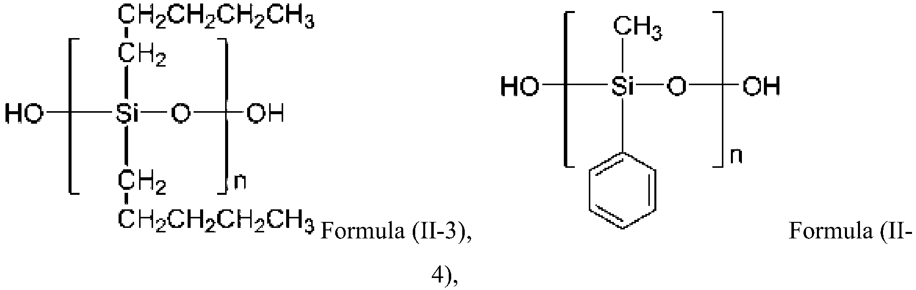

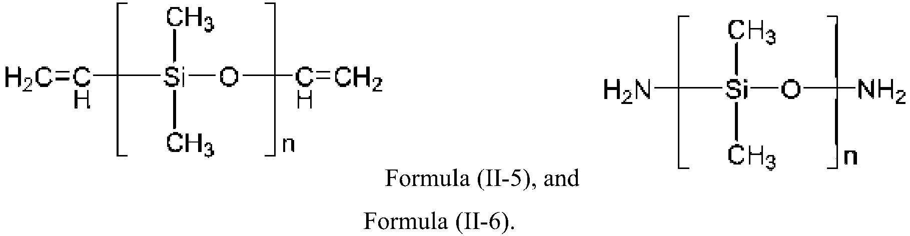

In some embodiments, the weight-average molecular weight of the polysiloxane is 1×10³ Da to 1×10⁶ Da; optionally 1×10⁵ Da to 1×10⁶ Da. When the weight-average molecular weight of the polysiloxane falls within the above-mentioned range, the formation of a uniform coating on the surface of the transition metal oxide is facilitated, and a binding effect can be realized, thereby facilitating the subsequent formation of a positive electrode film layer.

In some embodiments, the positive electrode active material further satisfies at least one of the following conditions:
(1) the volume average particle size Dv50 of the positive electrode active material is 2.5 µm to 5 µm; optionally 3.5 µm to 4.5 µm;
(2) the volume average particle size Dv50 of the transition metal oxide is 2.5 µm to 5 µm; optionally 3.5 µm to 4.5 µm;
(3) the thickness of the coating layer is 1 nm to 100 nm;
(4) based on the total mass of the positive electrode active material, the percentage mass content of the coating layer is 0.1% to 5%; and
(5) based on the total mass of the positive electrode active material, the ratio of the percentage mass content of the silane monomer derivative to the percentage mass content of the polysiloxane is (0.07 to 7):1.

Thus, when the positive electrode active material in this embodiment of the present application satisfies the above-mentioned conditions, the coating performance can be further improved.

In some embodiments, the coating layer may also include at least one of an olefin polymer and an acrylate polymer. The above-mentioned polymer is a linear polymer. The linear polymer can form a linear coating on the transition metal oxide. The combined effect of the linear coating and a surface coating of the above-mentioned silicon-containing polymer can further improve the coating effect on the transition metal oxide.

In some embodiments, the transition metal oxide includes a compound with a molecular formula of LiₐNi_{b}Co_{c}Me_{d}Oₑ and a modified compound thereof. Me includes at least one of Mn, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; optionally, Me includes at least one of Mn, Al, Mg, Fe, Zn, Cu and the like; and 0.8≤a≤1.2, 0.3≤b<1, 0<c<1, 0<d<1, 1<e<6, and b+c<1.

In some embodiments, the transition metal oxide includes one or more of LiNi_{1/3}Co_{1/3}Mn_{1/3}O₂, LiNi_{0.8}Co_{0.1}Mn_{0.1}O₂, LiNi_{0.6}Co_{0.1}Mn_{0.3}O₂, LiNi_{0.6}Co_{0.2}Mn_{0.2}O₂, LiNi_{0.5}Co_{0.3}Mn_{0.2}O₂, LiNi_{0.84}Co_{0.11}Al_{0.05}O₂, and LiNi_{0.86}Co_{0.11}Al_{0.03}O₂.

Thus, in this embodiment of the present application, the coating layer is arranged on at least part of the transition metal oxide, so that the surface of the transition metal oxide can be effectively protected, the structural stability of the transition metal oxide can be improved, the cycle life of the transition metal oxide can be improved, and the DCR can be reduced.

According to a second aspect, an embodiment of the present application provides a preparation method for a positive electrode active material, the preparation method including:
providing a transition metal oxide;
providing a silane monomer derivative to the transition metal oxide such that the silane monomer derivative is coated on at least part of the surface of the transition metal oxide, where the silane monomer derivative includes a first group; and
providing polysiloxane to the silane monomer derivative, the polysiloxane undergoing a cross-linking reaction that occurs between a second group contained in the polysiloxane and the first group to form a silicon-containing polymer, and the silicon-containing polymer being coated on at least part of the surface of the transition metal oxide, where the molecular weight of the polysiloxane is greater than that of the silane monomer derivative.

Thus, in this embodiment of the present application, the silane monomer derivative and the polysiloxane are introduced in stages. The silane monomer derivative is introduced first, so that the silane monomer derivative is pre-coated on the surface of the transition metal oxide. Then, with the silane monomer derivative used as an adhesion promoter, the polysiloxane is introduced to the surface of the transition metal oxide, and the polysiloxane and the silane monomer derivative undergo cross-linking polymerization to form a silicon-containing polymer. The silicon-containing polymer can be coated on at least part of the surface of the transition metal oxide to form a uniform coating, thereby improving the protection performance for the transition metal oxide, and improving the structural stability of the transition metal oxide. Thus, when the transition metal oxide is applied to a battery cell, the cycle life of the battery cell is prolonged, and the DCR of the battery cell is reduced.

According to a third aspect, an embodiment of the present application provides a positive electrode plate, including a positive electrode current collector and a positive electrode film layer arranged on at least one side of the positive electrode current collector. The positive electrode film layer includes the positive electrode active material according to any embodiment of the first aspect of the present application, or the positive electrode active material prepared by the method according to any embodiment of the second aspect of the present application.

According to a fourth aspect, an embodiment of the present application provides a battery, including the positive electrode plate according to any embodiment of the third aspect.

According to a fifth aspect, an embodiment of the present application provides an electrical apparatus, including the battery according to any embodiment of the fourth aspect.

### BRIEF DESCRIPTION OF THE DRAWINGS

In order to explain the technical solutions of embodiments of the present application more clearly, a brief introduction will be given to the accompanying drawings required to be used in the embodiments of the present application. It is evident that the accompanying drawings described below are only some embodiments of the present application. For those of ordinary skill in the art, other accompanying drawings can be obtained based on these drawings without any creative effort.
FIG. 1 is a schematic diagram of an embodiment of a battery cell according to the present application;
FIG. 2 is a schematic exploded view of the embodiment of the battery cell shown in FIG. 1;
FIG. 3 is a schematic diagram of an embodiment of a battery module according to the present application;
FIG. 4 is a schematic diagram of an embodiment of a battery pack according to the present application;
FIG. 5 is a schematic exploded view of the embodiment of the battery pack shown in FIG. 4;
FIG. 6 is a schematic diagram of an embodiment of an electrical apparatus including a battery cell of the present application as a power source;
FIG. 7 is a transmission electron microscopy (TEM) spectrum of positive electrode plates of lithium-ion batteries in Example 1 and Comparative Example 1;
FIG. 8 is one of X-photoelectron spectroscopy (XPS) spectra of the positive electrode plate of the lithium-ion battery in Example 1;
FIG. 9 is one of X-photoelectron spectroscopy (XPS) spectra of the positive electrode plate of the lithium-ion battery in Example 1;
FIG. 10 is one of X-photoelectron spectroscopy (XPS) spectra of the positive electrode plate of the lithium-ion battery in Example 1;
FIG. 11 is a graph of cyclic charge and discharge of the lithium-ion batteries in Example 1 and Comparative Example 1; and
FIG. 12 is a graph of DC resistance (DCR) of the lithium-ion batteries in Example 1 and Comparative Example 1.

The accompanying drawings are not necessarily drawn to the actual scale.

The reference numerals are described as follows:
1. Battery pack; 2. Upper box; 3. Lower box; 4. Battery module;
5: Battery cell; 51. Case; 52. Electrode assembly;
53. Cover plate; and
6. Electrical apparatus.

### DETAILED DESCRIPTION

Hereinafter, embodiments of a positive electrode active material, a positive electrode plate, a battery cell, a battery, and an electrical apparatus of the present application are specifically disclosed with appropriate reference to the accompanying drawings. However, there will be cases in which unnecessary detailed explanations are omitted. For example, there are cases in which detailed explanations of well-known matters and repeated explanations of actually the same structure are omitted. This is to avoid making the following explanations unnecessarily lengthy, thereby facilitating understanding by those skilled in the art. In addition, the accompanying drawings and following explanations are provided for those skilled in the art to fully understand the present application, and are not intended to limit the subject matter recited in the claims.

A "range" disclosed in the present disclosure is defined in the form of a lower limit and an upper limit. A given range is defined by selecting a lower limit and an upper limit, and the selected lower limit and upper limit define boundaries of a particular range. The range defined in this way may be inclusive or exclusive of end values, and can be arbitrarily combined, that is, any lower limit may be combined with any upper limit to form a range. For example, if ranges of 60 to 120 and 80 to 110 are listed for a particular parameter, it is to be understood that ranges of 60 to 110 and 80 to 120 are also contemplated. In addition, if the minimum range values 1 and 2 and the maximum range values 3, 4 and 5 are listed, the following ranges can be all contemplated: 1 to 3, 1 to 4, 1 to 5, 2 to 3, 2 to 4 and 2 to 5. In the present application, unless otherwise specified, a numerical range "a to b" represents an abbreviated representation of any combination of real numbers between a to b, where both a and b are real numbers. For example, the numerical range "0 to 5" represents that all real numbers between 0 and 5 have been listed herein, and "0 to 5" is merely the abbreviated representation of the combination of these numerical values. In addition, when a parameter is expressed as an integer ≥2, it is equivalent to disclosing that the parameter is, for example, an integer such as 2, 3, 4, 5, 6, 7, 8, 9, 10, 11, 12, or the like.

Unless otherwise specified, all the embodiments and optional embodiments of the present application can be combined with each other form new technical solutions.

Unless otherwise specified, all technical features and optional technical features of the present disclosure can be combined with each other to form new technical solutions.

Unless otherwise specified, all steps in the present application can be performed sequentially or randomly, preferably sequentially. For example, the method includes steps (a) and (b), meaning that the method may include steps (a) and (b) performed sequentially, or may include steps (b) and (a) performed sequentially. For example, the method mentioned may further include step (c), meaning that step (c) can be added to the method in any order. For example, the method may include steps (a), (b), and (c), may include steps (a), (c), and (b), or may include steps (c), (a), and (b).

The term "linear alkyl" encompasses linear alkyl and branched alkyl. For example, the alkyl may be C1-C50 alkyl, C1-C40 alkyl, C1-C30 alkyl, C1-C20 alkyl, C1-C12 alkyl, C1-C10 alkyl, C1-C6 alkyl, and C1-C4 alkyl. In some embodiments, alkyl includes methyl, ethyl, propyl, isopropyl, butyl, isobutyl, sec-butyl, tert-butyl, cyclobutyl, pentyl, isopentyl, neopentyl, tert-pentyl, cyclopentyl, hexyl, cyclohexyl, heptyl, cycloheptyl, octyl, cyclooctyl, nonyl, decyl and the like. In addition, the alkyl may be optionally substituted. The term "haloalkyl" refers to alkyl in which hydrogen atoms are partially or completely substituted with halogen atoms. The term "halogen atoms" refers to a fluorine atom, a chlorine atom, a bromine atom, an iodine atom, and the like.

The term "cycloalkyl" refers to a closed alkyl ring system. For example, the cycloalkyl may be C3-C50 cycloalkyl, C3-C40 cycloalkyl, C3-C30 cycloalkyl, C3-C20 cycloalkyl, C3-C10 cycloalkyl, and C3-C8 cycloalkyl, where the C3-C8 cycloalkyl refers to containing 3 to 8 carbon atoms for ring formation. In addition, the cycloalkyl may be optionally substituted, and carbon atoms in a cycloalkyl ring are substituted with heteroatoms. The heteroatoms may include nitrogen atoms, oxygen atoms, sulfur atoms, and the like.

The term "alkoxyl" encompasses linear alkoxyl and branched alkoxyl. For example, the alkoxyl may be C1-C50 alkoxyl, C1-C40 alkoxyl, C1-C30 alkoxyl, C1-C20 alkoxyl, C1-C12 alkoxyl, C1-C10 alkoxyl, C1-C6 alkoxyl, and C1-C4 alkoxyl. In some embodiments, the alkoxyl includes methyl, ethyl, propyl, isopropyl, butyl, isobutyl, sec-butyl, tert-butyl, cyclobutyl, pentyl, isopentyl, neopentyl, tert-pentyl, cyclopentyl, hexyl, cyclohexyl, heptyl, cycloheptyl, octyl, cyclooctyl, nonyl, decyl and the like. In addition, the alkoxyl may be optionally substituted. The term "haloalkoxyl" refers to alkoxyl in which hydrogen atoms are partially or completely substituted with halogen atoms. The term "halogen atoms" refers to a fluorine atom, a chlorine atom, a bromine atom, an iodine atom, and the like.

The term "alkenyl" encompasses linear alkenyl and branched alkenyl. For example, the alkenyl may be C2-C50 alkenyl, C2-C40 alkenyl, C2-C30 alkenyl, C2-C20 alkenyl, C2-C12 alkenyl, C2-C10 alkenyl, C2-C6 alkenyl, C2-C6 alkenyl, and C2-C4 alkenyl. In some embodiments, the alkenyl includes vinyl, propenyl, butenyl, butenyl, pentenyl, hexenyl, heptenyl, octenyl, and the like. In addition, the alkenyl may be optionally substituted.

The term "aryl" refers to a closed aromatic ring or ring system. For example, the aryl may be C6-C50 aryl, C6-C40 aryl, C6-C30 aryl, C6-C20 aryl and C6-C10 aryl, where the C6-C30 aryl refers to containing 6 to 30 carbon atoms for ring formation. In some embodiments, the aryl includes phenyl, naphthyl, phenanthryl, anthracyl, biphenyl, triphenylene, pyrenyl, spirobifluorenyl, yl, perylenyl, indenyl, azulenyl, and the like. In addition, the aryl may be optionally substituted, and carbon atoms in an aryl ring are substituted with heteroatoms. The heteroatoms may include nitrogen atoms, oxygen atoms, sulfur atoms, and the like.

The term "halogen atom" refers to a fluorine atom, a chlorine atom, a bromine atom, or the like.

The term "hydrogen" refers to 1H (protium, H), 2H (deuterium, D), or 3H (tritium, T). In various embodiments, the "hydrogen" may be 1H (protium, H).

Throughout this specification, the substituents of the compounds are disclosed in groups or ranges. It is expressly contemplated that such description includes each and every individual subcombination of the members of these groups and ranges. For example, the term "C1-C8 alkyl" is expressly contemplated to individually disclose C1, C2, C3, C4, C5, C6, C7, C8, C1-C8, C1-C7, C1-C6, C1-C5, C1-C4, C1-C3, C1-C2, C2-C8, C2-C7, C2-C6, C2-C5, C2-C4, C2-C3, C3-C8, C3-C7, C3-C6, C3-C5, C3-C4, C4-C8, C4-C7, C4-C6, C4-C5, C5-C8, C5-C7, C5-C6, C6-C8, C6-C7 and C7-C8 alkyl.

As other examples, integers in the range of 5 to 40 are expressly contemplated to individually disclose 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40, and integers in the range of 1 to 20 are expressly contemplated to individually disclose 1, 2, 3, 4, 5, 6, 7, 8, 9, 10, 11, 12, 13, 14, 15, 16, 17, 18, 19, and 20. Accordingly, other groups or ranges are to be expressly contemplated.

When the above-mentioned groups are substituted, substituents may be independently selected from halogen atoms or heteroatoms.

With the expansion of the application range of battery cells, the requirements for the performance of battery cells, such as energy density and voltage plateau, are gradually improved. The positive electrode active material can provide active lithium required for reversible intercalation and deintercalation between positive and negative electrode lithium-intercalated compounds. Thus, the positive electrode active material significantly affects the performance of a battery cell. As a common material of the positive electrode active material, the transition metal oxide has been extensively researched.

In addition to the lithium element, the transition metal oxide further includes a plurality of metal elements. The plurality of metal elements have a synergistic effect. For example, the nickel element can effectively improve capacity. The cobalt element can play a role of stabilizing the layered structure of the transition metal oxide, and can relieve the phenomenon of cation mixing to some extent. The manganese element can improve the structural stability of the transition metal oxide. To further improve the energy density of a battery cell, the positive electrode active material tends to develop towards a high-voltage system. However, an increase in a service voltage will reduce the structural stability of the positive electrode active material, the structure of the positive electrode active material is prone to damage, and lattice oxygen is prone to release. Thus, a side reaction between the positive electrode active material and an electrolyte may be exacerbated, thereby promoting the dissolution of a transition metal in the transition metal oxide. The dissolution of the transition metal may further deteriorate the structural stability of the positive electrode active material, thereby shortening the cycle life of the battery cell, and increasing the DC resistance (DCR) of the system. Therefore, it is difficult for the positive electrode active material to satisfy the requirements on the energy density, the power, and the like in the later period of use of the battery cell.

To improve the above-mentioned problems, the surface of the transition metal oxide is usually coated in the related art. However, due to a poor binding force between the coating layer and the transition metal oxide, the coating layer has the risk of detaching from the surface of the transition metal oxide. Therefore, it impossible to significantly improve the cycle life and DC resistance (DCR) of the battery cell.

**In** view of the foregoing problem, an embodiment of the present application provides a positive electrode active material. In the positive electrode active material, at least part of the surface of a transition metal oxide is coated with a coating layer. The coating layer includes a silicon-containing polymer. The silicon-containing polymer is formed by polymerizing a silane monomer derivative containing a first group and polysiloxane containing a second group. The first group is reactive with the second group. The molecular weight of the silane monomer derivative is less than that of the polysiloxane.

The silane monomer derivative is a small molecule organic silicon compound, has a relatively small molecular weight, and binds more closely to the transition metal oxide. The silane monomer derivative is polymerized with the polysiloxane to form a silicon-containing polymer, so that the silicon-containing polymer is coated on at least part of the surface of the transition metal oxide. Since the polysiloxane has a relatively high molecular weight, the crosslinking between the polysiloxane and the silane monomer derivative readily forms a network coating structure, thereby improving a coating effect on the transition metal oxide, so that the transition metal oxide is well protected, the risk that a side reaction occurs when the transition metal oxide contacts the electrolyte is lowered, and the structural stability of the transition metal oxide is improved. Thus, when the positive electrode active material is applied to a battery cell, the cycle life of the battery cell can be prolonged, the DC resistance (DCR) can be reduced, and so on. Next, the technical solution of the present application will be described in detail.

### Positive electrode active material

According to a first aspect, an embodiment of the present application provides a positive electrode active material. The positive electrode active material includes a transition metal oxide and a coating layer. The coating layer is coated on at least part of the surface of the transition metal oxide. The coating layer includes a silicon-containing polymer. The silicon-containing polymer is formed by polymerizing a silane monomer derivative containing a first group and polysiloxane containing a second group. The first group is reactive with the second group. The molecular weight of the silane monomer derivative is less than that of the polysiloxane.

In addition to active ions such as a lithium ion and a sodium ion, the transition metal oxide may further include various other metal ions. Exemplarily, the transition metal oxide may include a ternary material, a quaternary material, and the like. The transition metal oxide has relatively high energy density and relatively high reversible capacity. However, since the bare surface of the transition metal oxide is in direct contact with the electrolyte, the performance of the transition metal oxide may be deteriorated. Therefore, in this embodiment of the present application, the coating layer is arranged on the surface of the transition metal oxide. The coating layer may include the silicon-containing polymer, or may further include other material such as a binder. The coating layer can cover part of the surface of the transition metal oxide, or may substantially cover the entire surface of the transition metal oxide. Due to a relatively small molecular weight, the silane monomer derivative is evenly distributed on the surface of the transition metal oxide more easily, so that the silicon-containing polymer can evenly cover the surface of the transition metal oxide, and tends to be coated on the entire surface of the transition metal oxide, thereby improving the protection performance for the transition metal oxide.

A silane monomer refers to a compound of silicon and hydrogen. The silane monomer can be polymerized with the same or other molecules to form a polymer. The silane monomer derivative refers to a silane monomer in which at least part of hydrogen atoms are substituted with other groups (e.g., non-hydrogen groups). The non-hydrogen groups may include at least one of alkyl, alkoxyl, aryl, amino, carboxyl and other groups.

Since the silane monomer derivative is a small molecule compound, its molecular weight is usually relatively small and its molecular chain is relatively short. Therefore, the silane monomer derivative is evenly distributed on the surface of the transition metal oxide more easily. There are a large number of hydrogen bond binding sites between the silane monomer derivative and the transition metal oxide, so that the binding strength therebetween is higher. The silane monomer derivative can be used as an adhesion promoter for the polysiloxane to introduce the polysiloxane into the surface of the transition metal oxide.

The polysiloxane is a polymer including silicon-oxide bonds Si-O. The polysiloxane has a relatively high molecular weight, and usually has a relatively long chain. Therefore, it is difficult to form a uniform coating on the surface of the transition metal oxide. The polysiloxane includes the second group. The second group is reactive with the first group. The first group can introduce the entire polysiloxane into the surface of the transition metal oxide by using the second group. Therefore, a cross-linking reaction occurs between the second group and the first group. The polysiloxane and the silane monomer derivative may undergo condensation on the surface of the transition metal oxide to form a network structure, and a layered coating is formed on the surface of the transition metal oxide, so that the surface of the transition metal oxide can be well protected, thereby lowering the risk that a side reaction occurs when the transition metal oxide is in direct contact with the electrolyte, and the structural stability of the transition metal oxide is improved. Moreover, since the silicon-containing polymer is rich in silicon-oxide bonds, which can absorb hydrofluoridic acid (HF) in an electrolyte, so that the corrosion of the transition metal oxide by the electrolyte can be effectively relieved, thereby further improving the structural stability of the transition metal oxide. Thus, when the positive electrode active material is applied to a battery cell, the cycle life of the battery cell can be prolonged, the DC resistance (DCR) can be reduced, and so on.

Thus, in the positive electrode active material according to this embodiment of the present application, the coating layer is arranged on at least part of the surface of the transition metal oxide. Since a binding force between the coating layer and the transition metal oxide is relatively strong, the coating layer is not prone to detachment. The coating layer can protect the surface of the transition metal oxide well. In addition, since the coating layer contains silicon-oxide bonds, which can absorb hydrofluoridic acid (HF) in an electrolyte, the corrosion of the transition metal oxide by the electrolyte can be effectively relieved, thereby alleviating the issues of surface phase transition and oxygen release of the transition metal oxide, and further improving the structural stability of the transition metal oxide. Thus, when the positive electrode active material is applied to a battery cell, the cycle life of the battery cell can be prolonged, the DC resistance (DCR) can be reduced, and so on.

In some embodiments, the coating layer is of a three-dimensional cross-linked network structure. Based on layered coating, coating for the transition metal oxide by the structure is more prone to the formation of an integral surface coating, thereby improving the coating effect on the transition metal oxide. Moreover, the three-dimensional cross-linked network structure facilitates the migration of active ions, thereby improving the dynamics performance of the material.

In some embodiments, the silane monomer derivative includes a compound represented by Formula (I): 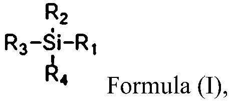 in Formula (I),
R₁, R₂, R₃ and R₄ each independently include at least one of a first group, a hydrogen atom, a halogen atom, substituted or unsubstituted C1-C6 alkyl, substituted or unsubstituted C2-C6 alkenyl, substituted or unsubstituted C2-C6 alkynyl and substituted or unsubstituted C6-C10 aryl, where at least one of R₁, R₂, R₃ and R₄ includes the first group. The alkyl may include at least one of linear alkyl and cycloalkyl.

Optionally, the halogen atom may include at least one of a fluorine atom, a chlorine atom, and a bromine atom.

Optionally, R₁, R₂, R₃ and R₄ each independently include at least one of a first group, a hydrogen atom, a halogen atom, substituted or unsubstituted C1-C3 alkyl, substituted or unsubstituted C2-C4 alkenyl, substituted or unsubstituted C2-C4 alkynyl and substituted or unsubstituted C6-C8 aryl, where at least one of R₁, R₂, R₃ and R₄ includes the first group.

When R₁, R₂, R₃ and R₄ include the above-mentioned groups, a molecular chain of the silane monomer derivative is relatively short, thereby facilitating a reaction between the first group and the second group in the silane monomer derivative. A composite structure can be obtained through a cross-linking reaction that occurs between the first group and the second group. The introduction of the composite structure enables the formation of a relatively complete layered coating on the surface of transition metal oxide particles, thereby protecting the surface of the transition metal oxide particles. The Si-O bonds enriched in the coating layer can absorb the HF in the electrolyte, so that the corrosion by the electrolyte is effectively relieved, and the dissolution of metals in the transition metal oxide and surface phase transition can be relieved, thereby improving the cycle life and DCR increase of the positive electrode active material.

Optionally, at least two of R₁, R₂, R₃ and R₄ include the first group. With the increase of the number of the first groups, the number of sites in the silane monomer derivative that can cross-link with the polysiloxane increases, and the silicon-containing polymer formed by the silane monomer derivative and the polysiloxane is more prone to forming a three-dimensional cross-linked network structure.

In some embodiments, the first group includes at least one of substituted or unsubstituted C1-C6 alkoxyl, amino, carboxyl, hydroxyl, and an ester group. The above-mentioned first group has relatively high reactivity, thereby facilitating a reaction with the second group.

Optionally, the first group includes substituted or unsubstituted C1-C6 alkoxyl.

In some embodiments, the silane monomer derivative includes at least one of a compound represented compounds represented by Formula (I-1) to Formula (I-12),

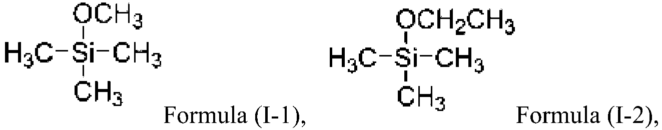

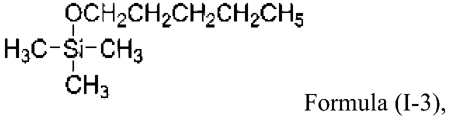

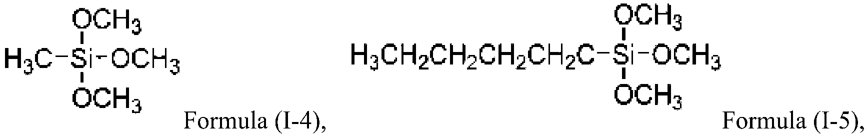

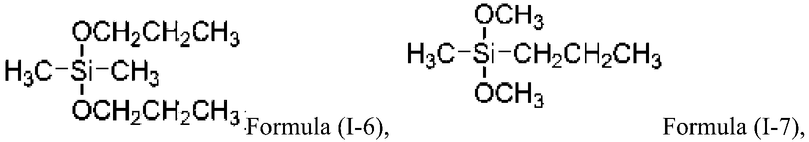

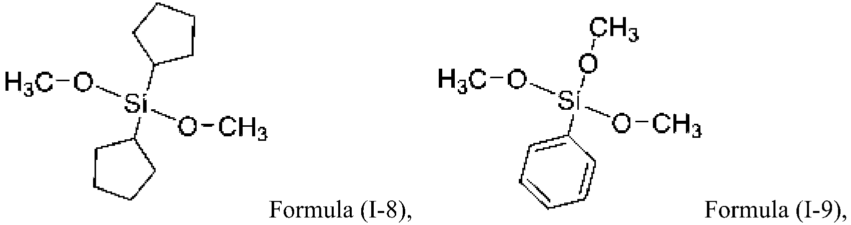

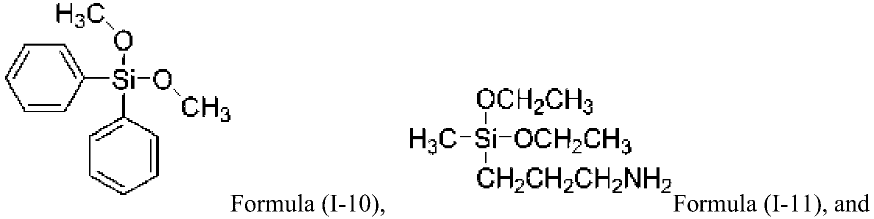

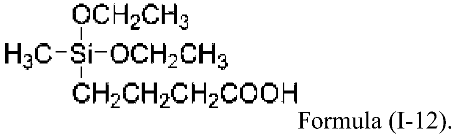

The silane monomer derivative is a low-molecular-weight compound, which is more prone to binding to a transition metal oxide. In some embodiments, the relative molecular mass of the silane monomer derivative is 65 to 400.

Exemplarily, the relative molecular mass of the silane monomer derivative may be 65, 66, 70, 75, 80, 85, 90, 95, 100, 105, 110, 115, 120, 130, 140, 150, 160, 170, 180, 190, 200, 210, 220, 230, 240, 250, 260, 270, 280, 290, 300, 310, 320, 330, 340, 350, 360, 370, 380, 390, 400, or a range formed by any two of these values.

In some embodiments, the polysiloxane includes a compound represented by Formula (II): 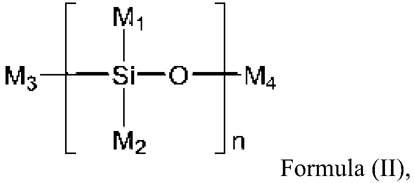 in Formula (II),
n represents degree of polymerization, and n is a positive integer selected from 2 to 50;
M₁, M₂, M₃ and M₄ each independently include at least one of a second group, a hydrogen atom, a halogen atom, substituted or unsubstituted C1-C6 alkyl, substituted or unsubstituted C2-C6 alkenyl, substituted or unsubstituted C2-C6 alkynyl and substituted or unsubstituted C6-C10 aryl, and at least one of M₁, M₂, M₃ and M₄ includes the second group. The alkyl may include at least one of linear alkyl and cycloalkyl. Optionally, the alkyl may include cycloalkyl.

Optionally, the halogen atom may include at least one of a fluorine atom, a chlorine atom, and a bromine atom.

Optionally, M₁, M₂, M₃ and M₄ each independently include at least one of a second group, a hydrogen atom, a halogen atom, substituted or unsubstituted C1-C3 alkyl, substituted or unsubstituted C2-C4 alkenyl, substituted or unsubstituted C2-C4 alkynyl and substituted or unsubstituted C6-C8 aryl, and at least one of M₁, M₂, M₃ and M₄ includes the second group.

When M₁, M₂, M₃ and M₄ include the above-mentioned groups, molecular chains of a side chain and an end group of the polysiloxane are relatively short, thereby facilitating a reaction between the second group and the first group in the polysiloxane, and a three-dimensional cross-linked network structure is obtained through a cross-linking composite reaction between functional groups.

Optionally, at least two of M₁, M₂, M₃ and M₄ include the second group. With the increase of the number of the second groups, the number of sites in the silane monomer derivative that can cross-link with the polysiloxane increases, and the silicon-containing polymer formed by the silane monomer derivative and the polysiloxane is more prone to forming a three-dimensional cross-linked network structure.

Further optionally, at least one of M₃ and M₄ includes the second group. Further optionally, M₃ and M₄ each independently include the second group. An end group of the polysiloxane is a group that is reactive with the first group, and the first group and the end group of polysiloxane are cross-linked, then it is prone to forming a three-dimensional cross-linked network structure.

In some embodiments, the second group includes at least one of hydroxyl, alkenyl, amino, an ether group, and a halogen atom. Optionally, the halogen atom may include at least one of a fluorine atom, a chlorine atom, and a bromine atom. The above-mentioned second group has relatively high reactivity, thereby facilitating a reaction with the first group.

In some embodiments, the polysiloxane includes at least one of compounds represented by Formula (II-1) to Formula (II-6):

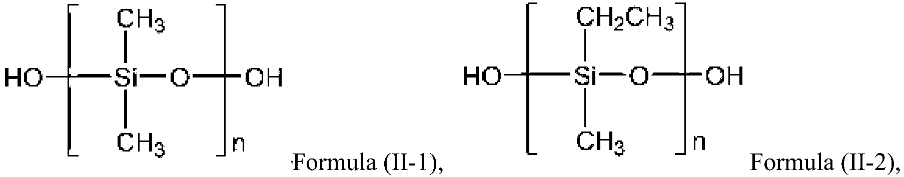

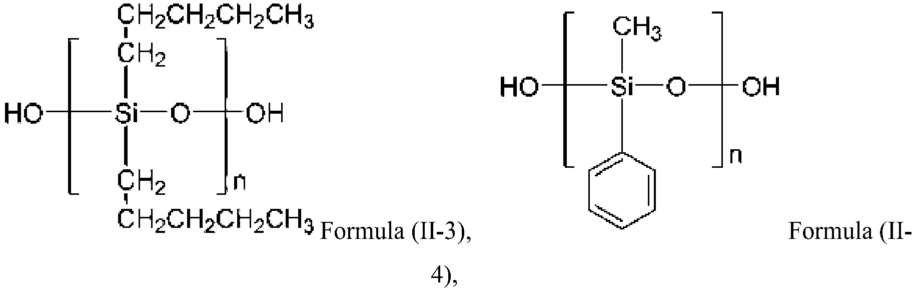

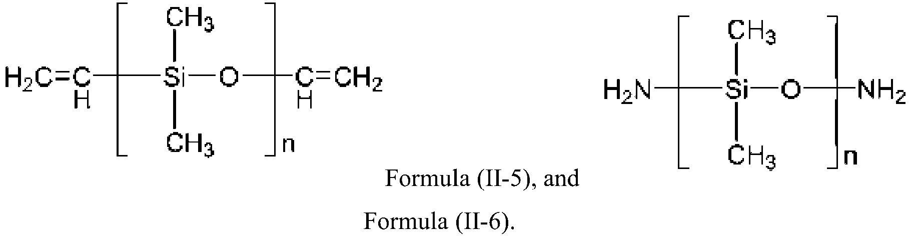

In some embodiments, the weight-average molecular weight of the polysiloxane is 1×10³ Da to 1×10⁶ Da; optionally 1×10⁵ Da to 1×10⁶ Da.

When the weight-average molecular weight of the polysiloxane falls within the above-mentioned range, the formation of a uniform coating on the surface of the transition metal oxide is facilitated, and a binding effect can be realized, thereby facilitating the subsequent formation of a positive electrode film layer.

Optionally, the weight-average molecular weight of the polysiloxane may be 1×10³ Da, 1.5×10³ Da, 5×10³ Da, 1×10⁴ Da, 5×10⁴ Da, 1×10⁵ Da, 5×10⁵ Da, 1×10⁶ Da, or a range formed by any two of these values.

In some embodiments, based on the total mass of the positive electrode active material, the ratio of the percentage mass content of the silane monomer derivative to the percentage mass content of the polysiloxane is (0.07 to 7):1.

When the ratio of the percentage mass content of the silane monomer derivative to the percentage mass content of the polysiloxane falls within the above-mentioned range, the silane monomer derivative can uniformly bind to the surface of the transition metal oxide. In addition, the degree of cross-linking between the polysiloxane and the silane monomer derivative can be improved, and the coating performance of the three-dimensional network structure of the silicon-containing polymer is better.

Exemplarily, the ratio of the percentage mass content of the silane monomer derivative to the percentage mass content of the polysiloxane is 0.07:1, 0.08:1, 0.10:1, 0.12:1, 0.15:1, 0.20:1, 0.30:1, 0.40:1, 0.50:1, 0.60:1, 0.70:1, 0.80:1, 0.90:1, 1:1, 1.5:1, 1.8:1, 2:1, 2.5:1, 3:1, 3.5:1, 4:1, 4.5:1, 5:1, 5.5:1, 6:1, 6.5:1, 7:1, or a range formed by any two of these values.

In some embodiments, the coating layer may also include at least one of an olefin polymer and an acrylate polymer. The above-mentioned polymer is a linear polymer. The linear polymer can form a linear coating on the transition metal oxide. The combined effect of the linear coating and a surface coating of the above-mentioned silicon-containing polymer can further improve the coating effect on the transition metal oxide.

Optionally, the olefin polymer may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer and tetrafluoroethylene-hexafluoropropylene copolymer.

Optionally, the acrylate polymer may include at least one of poly(fluoroacrylate) and poly(methylacrylate).

In some embodiments, based on the total mass of the positive electrode active material, the total percentage mass content of the olefin polymer and the acrylate polymer to the percentage mass content of the polysiloxane is (0.4 to 9):1.

Exemplarily, the ratio of the percentage mass content of the silane monomer derivative to the percentage mass content of the polysiloxane is 0.40:1, 0.50:1, 0.60:1, 0.70:1, 0.80:1, 0.90:1, 1:1, 1.5:1, 1.8:1, 2:1, 2.5:1, 3:1, 3.5:1, 4:1, 4.5:1, 5:1, 5.5:1, 6:1, 6.5:1, 7:1, 7.5:1, 8:1, 8.5:1, 9:1, or a range formed by any two of these values.

In this embodiment of the present application, a group of a polymer has a meaning well known in the art, can be determined by using a device and method commonly used in the art, and can be tested by using infrared (IR) spectrophotometry. Specifically, the polymer is tested by using a Thermo Nicolet Nexus 670 attenuated total reflection Fourier transform infrared spectrometer (FTIR-ATR), and is then tested according to the standard GB/T6040-2002. The test range for ATR methods: 600 to 4000 cm⁻¹; repeatability: ±2cm⁻¹; resolution: better than 4 cm⁻¹; and penetration depth is 0.2 to 0.6 µm.

In this embodiment of the present application, the structure of the polymer has a meaning well known in the art, can be determined by using a device and method commonly used in the art, and can be tested by using nuclear magnetic resonance (NMR). Specifically, 1H NMR and 13C NMR are performed on a Varian Mercury Plus-400 nuclear magnetic resonance spectrometer at a test temperature of 20°C, using TMS as an internal standard and CDCl₃ as a solution, with a proton resonance frequency is 400 MHz.

In this embodiment of the present application, the type of a polymer monomer (especially monomers with a relatively small content, such as mass content ≤10%) of a polymer has a meaning well known in the art, can be determined by using a device and method commonly used in the art, and can be tested by pyrolysis-gas chromatography-mass spectrometry. The specific test steps are as follows: 0.5 mg of sample is accurately weighed into a sample cup; the sample cup is fixed to a sample probe; then the sample probe is loaded into a pyrolyzer installed near a gas chromatography (GC) inlet; after the temperature of the pyrolyzer reaches a set temperature, an injection button is pressed such that the sample cup rapidly drops into the center of the pyrolyzer via free fall, and under the atmosphere of inert nitrogen (N₂), volatile components are instantaneously vaporized and carried by a carrier gas into a gas chromatography column for separation; and finally, detection is performed by using a flame ionization detector (FID) or a mass spectrometer (MS), thereby obtaining a gas chromatogram or total ion chromatogram.

In this embodiment of the present application, the weight-average molecular weight of a polymer has a meaning well known in the art, can be determined by using a device and method commonly used in the art, and can be tested by gel permeation chromatography (GPC). The specific test steps are as follows: an appropriate amount of a to-be-tested sample (with a concentration ensuring 8% to 12% obscuration) is taken; 20 ml of deionized water is added; meanwhile, external ultrasonication is performed for 5 min (53 KHz/120 W) to ensure that the sample is completely dispersed; and then, the sample is measured according to the standard GB/T19077-2016/ISO 13320:2009.

In this embodiments of the present application, the structural stability of the positive electrode active material may be further improved by further improving the following parameters of the positive electrode active material.

In some embodiments, the volume average particle size Dv50 of the positive electrode active material is 2.5 µm to 5 µm, optionally 3.5 µm to 4.5 µm. When the volume average particle size of the positive electrode active material falls within the above-mentioned range, the positive electrode active material is not prone to developing microcracks, and the structural stability of the positive electrode active material is relatively high, so that the cycle life of a battery cell can be improved.

Exemplarily, the volume average particle size Dv50 of the positive electrode active material may be 2.5 µm, 2.6 µm, 2.7 µm, 2.8 µm, 2.9 µm, 3.0 µm, 3.1 µm, 3.2 µm, 3.3 µm, 3.4 µm, 3.5 µm, 3.6 µm, 3.7 µm, 3.8 µm, 3.9 µm, 4.0 µm, 4.1 µm, 4.2 µm, 4.3 µm, 4.4 µm, 4.5 µm, 4.6 µm, 4.7 µm, 4.8 µm, 4.9 µm, 5 µm, or a range formed by any two of these values.

In this embodiment of the present application, the volume average particle size Dv50 of a material has a meaning well known in the art. The volume average particle size Dv50 of the material refers to a particle size that corresponds to 50% of volume distribution, and can be detected by using a device and method commonly used in the art. A specific amount of material is used as a sample, and the volume average particle size Dv50 is measured by using a Mastersizer 2000E laser particle sizer according to the test standard GB/T 19077-2016.

In some embodiments, the volume average particle size Dv50 of the transition metal oxide is 2.5 µm to 5.0 µm, optionally 3.5 µm to 4.5 µm. When the volume average particle size of the transition metal oxide falls within the above-mentioned range, the transition metal oxide is not prone to developing microcracks, and the structural stability of the positive electrode active material is relatively high, so that the cycle life of a battery cell can be improved.

Exemplarily, the volume average particle size Dv50 of the transition metal oxide may be 2.5 µm, 2.6 µm, 2.7 µm, 2.8 µm, 2.9 µm, 3.0 µm, 3.1 µm, 3.2 µm, 3.3 µm, 3.4 µm, 3.5 µm, 3.6 µm, 3.7 µm, 3.8 µm, 3.9 µm, 4.0 µm, 4.1 µm, 4.2 µm, 4.3 µm, 4.4 µm, 4.5 µm, 4.6 µm, 4.7 µm, 4.8 µm, 4.9 µm, 5 µm, or a range formed by any two of these values.

In this embodiment of the present application, the volume average particle size Dv50 of the transition metal oxide can be detected by using a device and method well known in the art. A specific amount of positive electrode active material is taken; the positive electrode active material is added to N-methylpyrrolidone (NMP); the coating layer on the surface of the positive electrode active material is dissolved in the NMP; then the transition metal oxide is exposed; the transition metal oxide is used as a sample after being dried; and the volume average particle size Dv50 is measured by using the Mastersizer 2000E laser particle sizer according to the test standard GB/T 19077-2016.

In some embodiments, the thickness of the coating layer is 1 nm to 100 nm. When the thickness of the coating layer falls within the above-mentioned range, the coating layer can have a good coating effect on the transition metal oxide, can improve the overall active ion transport capability of the positive electrode active material, and can reduce the DC resistance (DCR) of a battery cell.

Exemplarily, the thickness of the coating layer may be 1 nm, 5 nm, 10 nm, 15 nm, 20 nm, 25 nm, 28 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, or a range formed by any two of these values.

In this embodiment of the present application, the thickness of the coating layer has a meaning well known in the art, and can be measured by using a device and method well known in the art. A specific amount of positive electrode active material is taken; an approximately 100 nm slice is cut from a single particle; then, the slice is analyzed by using a transmission electron microscopy to obtain a TEM image; then, thicknesses of a plurality (for example, 5 or more) of different positions are measured on the TEM image; and at least six negative electrode active material samples are tested, where the average value of test results is used as the average thickness of the coating layer.

In some embodiments of the present application, based on the total mass of the positive electrode active material, the percentage mass content of the coating layer is 0.1% to 5%.

Exemplarily, the percentage mass content of the coating layer may be 0.1%, 0.5%, 0.8%, 1%, 1.2%, 1.5%, 2%, 2.2%, 2.5%, 3%, 3.5%, 3.8%, 4%, 4.2%, 4.5%, 4.8%, 5%, or a range formed by any two of these values.

In this embodiment of the present application, the percentage mass content of the coating layer has a meaning well known in the art, and can be measured by using a device and method well known in the art. A specific amount of positive electrode active material is taken and weighted to obtain its mass M1; the positive electrode active material is added to N-methylpyrrolidone (NMP); the coating layer on the surface of the positive electrode active material is dissolved in the NMP; then the transition metal oxide is exposed; and the transition metal oxide is weighed to obtain its mass M2 after being dried, then the percentage mass content of the coating layer is (M1-M2)/M1.

In some embodiments, the transition metal oxide includes a compound with a molecular formula of LiₐNi_{b}Co_{c}Me_{d}Oₑ and a modified compound thereof. Me includes at least one of Mn, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; optionally, Me includes at least one of Mn, Al, Mg, Fe, Zn, Cu and the like; and 0.8≤a≤1.2, 0.3≤b<1, 0<c<1, 0<d<1, 1<e<6, and b+c<1.

Since the content of the cobalt (Co) element in the transition metal oxide is relatively small, the phenomenon of cation mixing in the transition metal oxide is exacerbated, so that the transition metal oxide is prone to a surface phase transition in the cycle process, the cycle life is shortened, and the DCR is increased. In contrast, in this embodiments of the present application, the coating layer is arranged on at least part of the transition metal oxide, so that the surface of the transition metal oxide can be effectively protected, the structural stability of the transition metal oxide can be improved, the cycle life of the transition metal oxide can be improved, and the DCR can be reduced.

Optionally, Me includes at least one of Mn, Al, Mg, and Fe.

Optionally, 0.95≤a≤1.05. Exemplarily, a may be 0.95, 0.98, 1, 1.01, 1.02, 1.05, or a range formed by any two of the above-mentioned values.

Optionally, 0.3≤b<0.9; further optionally, 0.3≤b≤0.8. Exemplarily, b may be 0.3, 0.4, 0.5, 0.6, 0.7, 0.72, 0.75, 0.78, 0.79, 0.8, 0.82, 0.85, 0.86, 0.89, or a range formed by any two of the above-mentioned values.

Optionally, 0.2<c<0.7. Exemplarily, c may be 0.22, 0.3, 0.4, 0.5, 0.6, 0.68, or a range formed by any two of the above-mentioned values.

Optionally, 0<d<1. Exemplarily, d may be 0.1, 0.2, 0.3, 0.4, 0.5, 0.6, 0.7, 0.72, 0.75, 0.78, 0.79, 0.8, 0.85, 0.9, 0.95, or a range formed by any two of the above-mentioned values.

Optionally, 1<e<6. Exemplarily, e may be 1.2, 2, 2.5, 3, 3.5, 4, 4.5, 5, 5.2, 5.5, 5.8, or a range formed by any two of these values.

Optionally, and b+c<1. Exemplarily, b+c may be 0.1, 0.2, 0.3, 0.4, 0.5, 0.6, 0.7, 0.72, 0.75, 0.78, 0.79, 0.8, 0.85, 0.9, 0.95, or a range formed by any two of the above-mentioned values.

Exemplarily, the transition metal oxide includes one or more of LiNi_{1/3}Co_{1/3}Mn_{1/3}O₂, LiNi_{0.8}Co_{0.1}Mn_{0.1}O₂, LiNi_{0.6}Co_{0.1}Mn_{0.3}O₂, LiNi_{0.6}Co_{0.2}Mn_{0.2}O₂, LiNi_{0.5}Co_{0.3}Mn_{0.2}O₂, LiNi_{0.84}Co_{0.11}Al_{0.05}O₂, and LiNi_{0.86}Co_{0.11}Al_{0.03}O₂.

### Method for preparing positive electrode active material

According to a second aspect, an embodiment of the present application provides a method for preparing a positive electrode active material. The method can be used for preparing the positive electrode active material of any embodiment of the first aspect of the present application.
S110, provide a transition metal oxide;
S120, provide a silane monomer derivative to the transition metal oxide such that the silane monomer derivative is coated on at least part of the surface of the transition metal oxide, where the silane monomer derivative includes a first group; and
S130, provide polysiloxane to the silane monomer derivative, where the polysiloxane undergoes a cross-linking reaction that occurs between a second group contained in the polysiloxane and the first group to form a silicon-containing polymer, and the silicon-containing polymer is coated on at least part of the surface of the transition metal oxide, where the molecular weight of the polysiloxane is greater than that of the silane monomer derivative.

In this embodiment of the present application, the silane monomer derivative and the polysiloxane are introduced in stages. The silane monomer derivative is introduced first, so that the silane monomer derivative is pre-coated on the surface of the transition metal oxide. Then, with the silane monomer derivative used as an adhesion promoter, the polysiloxane is introduced to the surface of the transition metal oxide, and the polysiloxane and the silane monomer derivative undergo cross-linking polymerization to form a silicon-containing polymer. The silicon-containing polymer can be coated on at least part of the surface of the transition metal oxide to form a uniform coating, thereby improving the protection performance for the transition metal oxide, and improving the structural stability of the transition metal oxide. Thus, when the transition metal oxide is applied to a battery cell, the cycle life of the battery cell is prolonged, and the DCR of the battery cell is reduced.

In some embodiments, the method may further include:
S140, provide at least one of an olefin polymer and an acrylate polymer to a silicon-containing polymer, so that at least one of the olefin polymer and the acrylate polymer is coated on the surface of the silicon-containing polymer, thereby improving the coating effect on the transition metal oxide.

The above-mentioned polymer is a linear polymer. The linear polymer can form a linear coating on the transition metal oxide. The combined effect of the linear coating and a surface coating of the above-mentioned silicon-containing polymer can further improve the coating effect on the transition metal oxide.

### Positive electrode plate

According to a third aspect, an embodiment of the present application provides a positive electrode plate. The positive electrode plate includes a positive electrode current collector and a positive electrode film layer arranged on at least one side of the positive electrode current collector. The positive electrode film layer includes the positive electrode active material according to any embodiment of the first aspect of the present application, or the positive electrode active material prepared by the method according to any embodiment of the second aspect of the present application. The above-mentioned positive electrode active material is relatively high in structural stability, and not prone to undergoing a side reaction with an electrolyte. Therefore, when the positive electrode plate is applied to a battery cell, the cycle performance of the battery cell can be improved, and the DCR can be reduced.

For example, the positive electrode current collector has two surfaces that are opposite in its own thickness direction. The positive electrode film layer is arranged on either or both of two opposite surfaces of the positive electrode current collector.

In some embodiments, to further improve the energy density of the battery cell, the positive electrode active material used for lithium-ion batteries may include a transition metal oxide. The transition metal oxide includes a compound with a molecular formula of LiₐNi_{b}Co_{c}Me_{d}Oₑ and a modified compound thereof. Me includes at least one of Mn, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; optionally, Me includes at least one of Mn, Al, Mg, Fe, Zn, Cu and the like; and 0.8≤a≤1.2, 0.3≤b<1, 0<c<1, 0<d<1, 1<e<6, and b+c<1.

Since the content of the cobalt (Co) element in the transition metal oxide is relatively small, the phenomenon of cation mixing in the transition metal oxide is exacerbated, so that the transition metal oxide is prone to a surface phase transition in the cycle process, the cycle life is shortened, and the DCR is increased. In contrast, in this embodiments of the present application, the coating layer is arranged on at least part of the transition metal oxide, so that the surface of the transition metal oxide can be effectively protected, the structural stability of the transition metal oxide can be improved, the cycle life of the transition metal oxide can be improved, and the DCR can be reduced.

Optionally, Me includes at least one of Mn, Al, Mg, and Fe.

Exemplarily, the transition metal oxide includes one or more of LiNi_{1/3}Co_{1/3}Mn_{1/3}O₂, LiNi_{0.8}Co_{0.1}Mn_{0.1}O₂, LiNi_{0.6}Co_{0.1}Mn_{0.3}O₂, LiNi_{0.6}Co_{0.2}Mn_{0.2}O₂, LiNi_{0.5}Co_{0.3}Mn_{0.2}O₂, LiNi_{0.84}Co_{0.11}Al_{0.05}O₂, and LiNi_{0.86}Co_{0.11}Al_{0.03}O₂.

In the present application, the modified compound of each of the above-mentioned positive electrode active material can be obtained by performing doping modification and/or surface coating modification on the positive electrode active material.

The battery cell will be accompanied by the deintercalation and consumption of active ions such as Li in the charge and discharge process. The molar content of Li varies as the battery cell is discharged to different states. In the list of the positive electrode active materials in the embodiments of the present application, the molar content of Li is the one at the initial state of the material, that is, the state before feeding. The positive electrode active material is used in a battery system, and the molar content of Li may change after the charge and discharge cycles.

In the list of the positive electrode active materials in the embodiments of the present application, the molar content of oxygen O is only a theoretical value. The release of oxygen from the lattice will cause a change in the molar content of oxygen O. In fact, the molar content of oxygen O may fluctuate.

In some embodiments, the positive electrode film layer further includes optionally a positive electrode conductive agent. The type of the positive electrode conductive agent is not particularly limited in the embodiments of the present application. As an example, the positive electrode conductive agent includes at least one of superconducting carbon, conductive graphite, acetylene black, carbon black, Ketjen black, carbon dots, carbon nanotubes, graphene, and carbon nanofibers.

In some embodiments, based on the total mass of the positive electrode film layer, the ratio of the mass content of the positive electrode active material to the mass content of the positive electrode conductive agent is (9 to 99):1. When the mass content of the positive electrode active material and the content of the positive electrode conductive agent fall within the above-mentioned range, the overall conductivity of the positive electrode film layer can be improved, so that the capacity of the positive electrode active material can be easily utilized. Moreover, in the process of preparing positive electrode slurry, the slurry is not prone to agglomeration and the like, so that the dynamics performance of the positive electrode film layer can be improved.

Exemplarily, the ratio of the mass content of the positive electrode active material to the mass content of the positive electrode conductive agent may be 9:1, 10:1, 11:1, 12:1, 13:1, 15:1, 18:1, 20:1, 22:1, 25:1, 28:1, 30:1, 32:1, 35:1, 40:1, 42:1, 45:1, 50:1, 52:1, 55:1, 58:1, 60:1, 62:1, 64:1, 68:1, 50:1, 52:1, 54:1, 58:1, 60:1, 62:1, 65:1, 68:1, 70:1, 72:1, 75:1, 78:1, 80:1, 82:1, 85:1, 88:1, 90:1, 92:1, 95:1, 96:1, 98:1, 99:1, or a range formed by any two of these values.

In some embodiments, based on the total mass of the positive electrode film layer, the percentage mass content of the positive electrode conductive agent is ≤10%.

Exemplarily, the percentage mass content of the positive electrode conductive agent may be 0%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a range formed by any two of the above-mentioned values.

In some embodiments, the positive electrode film layer may further optionally include a positive electrode binder. The type of the positive electrode binder is not particularly limited in the present application. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylic resin. In some embodiments, based on the total mass of the positive electrode film layer, the percentage mass content of the positive electrode binder is ≤10%.

In some other embodiments, the positive electrode film layer may be formed without additionally adding the positive electrode binder. Since the coating layer of the positive electrode active material possesses adhesiveness, the coating layer can bond adjacent particles of the positive electrode active material as well as particles of the positive electrode active material and particles of the positive electrode conductive agent. Therefore, the use amount of the positive electrode binder can be reduced, the use amount of the positive electrode active material can be increased, and the capacity of the system can be increased.

Exemplarily, the mass percentage content of the positive electrode binder may be 0%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a range formed by any two of the above-mentioned values. When the percentage mass content of the positive electrode binder falls within the above-mentioned range, the viscosity of the positive electrode slurry can be increased, so that a binding force between the positive electrode film layer and the positive electrode current collector is relatively strong, and thus peeling and separation therebetween are not prone to occurrence. Moreover, the positive electrode slurry is not prone to agglomeration and the like, so that the dynamics performance of the positive electrode film layer can be improved.

In some embodiments, the positive electrode current collector may be a metal foil or a composite current collector. As an example of the metal foil, an aluminum foil can be used. The composite current collector may include a high molecular material substrate layer and a metal material layer formed on at least one surface of the high molecular material substrate layer. As an example, the metal material may include at least one of aluminum, an aluminum alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The positive electrode film layer is usually formed by coating positive electrode slurry onto the positive electrode current collector, drying and cold pressing. The positive electrode slurry is usually formed by dispersing the positive electrode active material, an optional conductive agent, an optional binder, and any other components in a solvent and performing well stirring. The solvent may be, but is not limited to, N-methylpyrrolidone (NMP).

### Method for preparing positive electrode plate

According to a fourth aspect, an embodiment of the present application provides a method for preparing a positive electrode plate.

The method includes:
S210, dissolve a silane monomer derivative in a solvent to form a silane monomer derivative solution, where the silane monomer derivative includes a first group;
S220, add a transition metal oxide to the silane monomer derivative solution to form a first intermediate system; and
S230, dissolve polysiloxane in the first intermediate system to form a second intermediate system, where in the second intermediate system, the polysiloxane a silicon-containing polymer through a cross-linking reaction of its first group with a second group, the silicon-containing polymer is coated on at least part of surface of the transition metal oxide, and positive electrode slurry is formed, where the molecular weight of the polysiloxane is greater than that of the silane monomer derivative.

It should be noted that, the transition metal oxide and the silane monomer derivative may be added in the same procedure or step, or may be added in steps. For example, the transition metal oxide is added first, and then the silane monomer derivative is added, or the silane monomer derivative is added first, and then the transition metal oxide is added.

In some embodiments, the transition metal oxide and the silane monomer derivative can be added into a solvent and stirred to form a first intermediate system, where the stirring time is 110 s to 600 s, and the stirring speed is 711 rpm to 2000 rpm. Optionally, the stirring time is 110 s to 150 s, and the stirring speed is 1500 rpm to 1800 rpm. Optionally, the stirring time is 550 s to 600 s, and the stirring speed is 1500 rpm to 1800 rpm.

In some embodiments, the polysiloxane is dissolved in the first intermediate system to form a second intermediate system with stirring, where the stirring time is 110 s to 600 s, and the stirring speed is 711 rpm to 2000 rpm. Optionally, the stirring time is 110 s to 150 s, and the stirring speed is 1500 rpm to 1800 rpm. Optionally, the stirring time is 550 s to 600 s, and the stirring speed is 1500 rpm to 1800 rpm.

The stirring time and/or stirring speed that fall within the above-mentioned ranges enable the various components in the system to be uniformly dispersed, and the formed silicon-containing polymer has good coating and adhesion performance to the transition metal oxide.

In some embodiments, a solution may be further added to the first intermediate system to replenish the solvent content of the system.

In some embodiments, the method may further include:
S240, add a positive electrode conductive agent to a first intermediate system.

The positive electrode conductive agent and polysiloxane may be added in the same process or step, or may be added in steps. For example, the polysiloxane is added first, and then the positive electrode conductive agent is added, or the positive electrode conductive agent is added first, and then the polysiloxane is added.

In some embodiments, after S230, the method may further include:
S250, provide a positive electrode binder to the second intermediate system, where the positive electrode binder is dissolved in the second intermediate system, and the positive electrode binder is coated on the surface of the silicon-containing polymer.

In some embodiments, the solvent may include at least one of N-methylpyrrolidone (NMP), methanol, ethanol, acetone, isopropanol and furan.

### Battery cell

According to a fifth aspect, an embodiment of the present application further provides a battery cell.

The battery cell, also referred to as a rechargeable battery or a storage battery, refers to a battery that can be reused, after the battery is discharged, by activating an active material in a charge manner.

In some embodiments, the battery cell includes the positive electrode plate of any embodiment of the third aspect of the embodiments of the present application, or the positive electrode plate prepared by the method of any embodiment of the fourth aspect. Thus, the battery cell in this embodiment of the present application can improve cycle performance and reduce the DC resistance (DCR).

### [Negative electrode plate]

In some embodiments, the battery cell further includes a negative electrode plate.

In some embodiments, the negative electrode plate includes a negative electrode current collector and a negative electrode film layer that is arranged on at least one surface of the negative electrode current collector and includes a negative electrode active material. For example, the negative electrode current collector has two surfaces that are opposite in its own thickness direction. The negative electrode film layer is arranged on either or both of the two opposite surfaces of the negative electrode current collector.

The negative electrode active material may be a negative electrode active material used for a battery cell and well known in the art. As an example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, a silicon oxide, a silicon-carbon composite, a silicon-nitrogen composite, and a silicon alloy material. The tin-based material may include at least one of elemental tin, a tin oxide, and a tin alloy material.

In some embodiments, the negative electrode film layer further optionally includes a negative electrode conductive agent. The type of the negative electrode conductive agent is not particularly limited in the embodiments of the present application. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on the total weight of the negative electrode film layer, the percentage mass content of the negative electrode conductive agent is ≤5 wt%.

In some embodiments, the negative electrode film layer further optionally includes a negative electrode binder. The type of the negative electrode binder is not particularly limited in the present application. As an example, the negative electrode binder may include one or more of styrene-butadiene rubber (SBR), water-soluble unsaturated resin SR-1B, waterborne acrylic resin (for example, polyacrylic acid (PAA), polymethylacrylic acid (PMAA), and sodium polyacrylate (PAAS)), polyacrylamide (PAM), polyvinyl alcohol (PVA), sodium alginate (SA), and carboxymethyl chitosan (CMCS). In some embodiments, based on the total weight of the negative electrode film layer, the percentage mass content of the positive electrode binder is ≤5 wt%.

In some embodiments, the negative electrode film layer further optionally includes other auxiliary agents. As an example, the other auxiliary agents may include a thickener, for example, sodium carboxymethyl cellulose (CMC-Na) or a PTC thermistor material. In some embodiments, based on the total weight of the negative electrode film layer, the percentage mass content of the other auxiliary agents is ≤2 wt%.

In some embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The negative electrode film layer is usually formed by coating negative electrode slurry onto the negative electrode current collector, drying and cold pressing. The negative electrode slurry is usually formed by dispersing the negative electrode active material, an optional conductive agent, an optional binder, and other auxiliary agents in a solvent and performing well stirring. The solvent may be N-methylpyrrolidone (NMP) or deionized water, but it is not limited to this.

The negative electrode plate does not exclude other additional functional layers other than the negative electrode film layer. For example, in certain embodiments, the negative electrode plate according to this embodiment of the present application may further include a conductive primer layer (which is, for example, formed by a conductive agent and a binder) sandwiched between the negative electrode current collector and the negative electrode film layer and arranged on the surface of the negative electrode current collector. In some other embodiments, the negative electrode plate of this embodiment of the present application further includes a protective layer that covers the surface of the negative electrode film layer.

### [Separator]

In some embodiments, the battery cell further includes a separator.

The type of the separator is not particularly limited in the present application, and any well-known separator with a porous structure having high chemical stability and mechanical stability can be selected.

In some embodiments, the material of the separator may include at least one of glass fiber, non-woven fabric, polyethylene, polypropylene, and polyvinylidene fluoride. The separator may be a single-layer thin film, or may be a multi-layer composite thin film, without particular limitations. When the separator is the multi-layer composite thin film, the materials of various layers may be the same or different, without particular limitations.

### [Electrolyte]

In some embodiments, the battery cell further includes an electrolyte.

In the charge and discharge process of the battery cell, active ions are intercalated and deintercalated back and forth between a positive electrode plate and a negative electrode plate. The electrolyte functions to conduct active ions between the positive electrode plate and the negative electrode plate. The type of the electrolyte is not particularly limited in the present application, and may be selected according to actual requirements.

The electrolyte includes an electrolyte salt and a solvent. The type of the electrolyte salt is not particularly limited, and may be selected according to actual requirements.

As an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluoro(oxalato)borate (LiDFOB), lithium bis(oxalato)borate (LiBOB), lithium difluorophosphate (LiPO₂F₂), lithium difluorobis(oxalate) phosphate (LiDFOP), and lithium tetrafluoro(oxalato)phosphate (LiTFOP).

For example, the solvent includes, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte further optionally includes an additive. For example, the additive may include a negative electrode film-forming additive, a positive electrode film-forming additive, or an additive that can improve some performance of the battery, such as an additive that improves overcharge performance of a battery, an additive that improves high temperature performance of the battery, or an additive that improves low temperature power performance of the battery.

In some embodiments, the positive electrode plate, the separator, and the negative electrode plate may be made into an electrode assembly by a winding process and/or a laminating process.

In some embodiments, the battery cell may include an outer package. The outer package can be used for packaging the above-mentioned electrode assembly and the electrolyte.

In some embodiments, the outer package of the battery cell may be a hard case, such as a hard plastic case, an aluminum case, or a steel case. The outer package of the battery cell may also be a soft package, such as a pouch-type soft package. The material of the soft package may be a plastic, such as at least one of polypropylene (PP), polybutylene terephthalate (PBT), and polybutylene succinate (PBS).

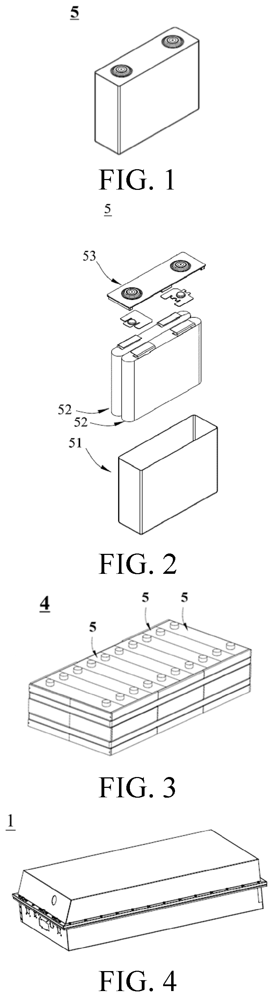

The shape of the battery cell is not particularly limited in the present application, which may be a cylindrical, prismatic, or in any other shape. FIG. 1 shows a battery cell 5 with a prismatic structure as an example.

In some embodiments, as shown in FIG. 2, the outer package may include a case 51 and a cover plate 53. The case 51 may include a bottom plate and a side plate connected to the bottom plate. The bottom plate and the side plate enclose an accommodating cavity. The case 51 is provided with an opening in communication with the accommodating cavity. The cover plate 53 is used for covering the opening to close the accommodating cavity. The positive electrode plate, the negative electrode plate, and the separator may be formed into an electrode assembly 52 by a winding process and/or a laminating process. The electrode assembly 52 is encapsulated in the accommodating cavity. The electrolyte infiltrates into the electrode assembly 52. The number of the electrode assemblies 52 contained in the battery cell 5 may be one or more, which may be adjusted as needed.

A preparation method for the battery cell of the present application is well known. In some embodiments, the positive electrode plate, the separator, the negative electrode plate, and the electrolyte can be assembled into a battery cell. As an example, the positive electrode plate, the separator, and the negative electrode plate may be formed into an electrode assembly by a winding process and/or a laminating process. The electrode assembly is placed in an outer package, dried, and then injected with the electrolyte. Procedures such as vacuum encapsulation, standing, formation, and shaping are performed to obtain a battery cell.

In some embodiments of the present application, the battery cell according to the present application can be assembled into a battery module. The number of the battery cells contained in the battery module may be more than one, and the specific number may be adjusted according to the application and capacity of the battery module.

FIG. 3 is a schematic diagram of a battery module 4 as an example. As shown in FIG. 3, in the battery module 4, a plurality of battery cells 5 may be arranged sequentially in the length direction of the battery module 4. Of course, the plurality of battery cells may also be arranged in any other manner. The plurality of battery cells 5 may be further fixed by fasteners.

Optionally, the battery module 4 may further include a housing having an accommodating space. The plurality of battery cells 5 are accommodated in the accommodating space.

In some embodiments of the present application, the above-mentioned battery modules may also be assembled into a battery pack. The number of the battery modules contained in the battery pack may be adjusted according to the application and the capacity of the battery pack.

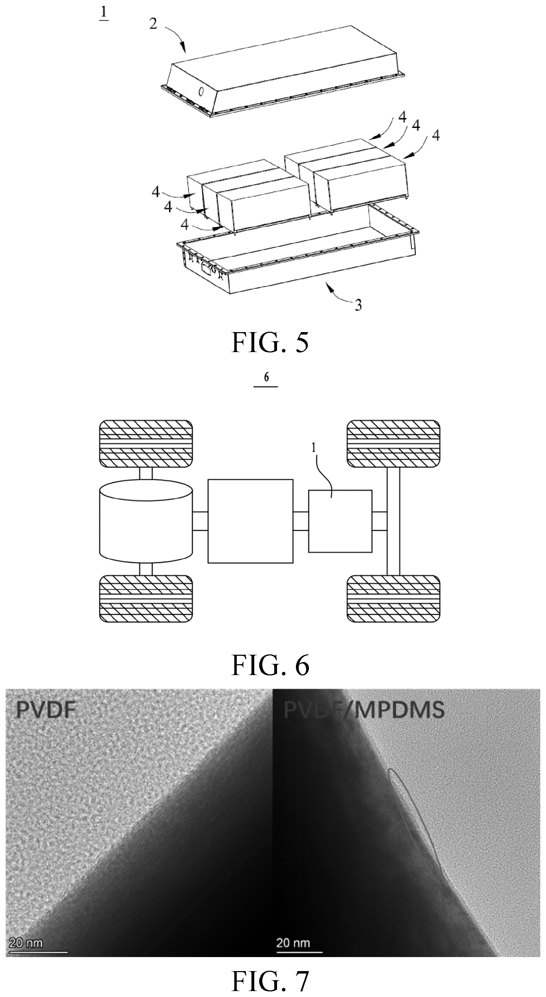

FIG. 4 and FIG. 5 are schematic diagrams of a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 is configured to cover the lower box 3, and a closed space for accommodating the battery modules 4 is formed. The plurality of battery modules 4 may be arranged in the battery box in any manner.

The battery in this embodiment of the present application may include one battery cell or a plurality of battery cells. Where the battery includes a plurality of battery cells, the battery may include a battery module or a battery pack.

### Electrical apparatus

According to a sixth aspect of an embodiment of the present application, an electrical apparatus is provided, including at least one of the battery cell, battery module or battery pack of the embodiments of the present application. The battery cell, the battery module, or the battery pack may be used as a power source of the electrical apparatus, or may be used as an energy storage unit of the electrical apparatus. The electrical apparatus may be, but is not limited to, a mobile device (for example, a mobile phone, or a laptop), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

For the electrical apparatus, the battery cell, the battery module, or the battery pack may be selected according to use requirements.

FIG. 6 is a schematic diagram of an electrical apparatus 6 as an example. The electrical apparatus 6 is a pure electric vehicle, a hybrid electric vehicle, or a plug-in hybrid electric vehicle, etc. To meet the requirements of the electrical apparatus 6 for high power and high energy density, a battery pack or a battery module may be used.

As another example, the electrical apparatus may be a mobile phone, a tablet, a laptop, or the like. The electrical apparatus usually requires lightness and thinness, and a battery cell can be used as a power source.

### Examples

The following embodiments provide a more specific description of the content disclosed in the present application. These embodiments are only used for descriptive purposes, as various modifications and changes within the scope of the content disclosed in the present application are obvious to those skilled in the art. Unless otherwise stated, all parts, percentages, and ratios of the following embodiments are based on mass, all reagents used in the embodiments are commercially available or obtained by synthesis according to conventional methods and can be directly used without further treatment, and all instruments used in the embodiments are commercially available.

### Example 1 Preparation of lithium-ion battery

### 1. Preparation of positive electrode plate

An aluminum foil having a thickness of 12 µm was used as a positive electrode current collector.

A silane monomer derivative and a transition metal oxide were added to solvent N-methylpyrrolidone (NMP) and well stirred to form a first intermediate system.

Then, polysiloxane, conductive carbon black and the NMP were added to a first intermediate system with stirring to form a second intermediate system. The polysiloxane and the silane monomer derivative underwent a cross-linking reaction to form a silicon-containing polymer, and the silicon-containing polymer was coated on the surface of the transition metal oxide.

Subsequently, the polyvinylidene fluoride (PVDF) was added to the second intermediate system and stirred to form positive electrode slurry. The weight-average molecular weight of the PVDF was 71000 Da.

The positive electrode slurry was uniformly coated onto the surface of a positive electrode current collector aluminum foil, and drying and cold pressing were performed to obtain a positive electrode plate.

In each step of forming the positive electrode slurry, the stirring time was 120 s, and the stirring speed was 1530 rpm.

The mass ratio of the positive electrode active material to the conductive carbon black to the silicon-containing polymer was 80:10:7.

The mass ratio of the silane monomer derivative to the polysiloxane to the polyvinylidene fluoride was 0.5:6.5:3.

### 2. Preparation of negative electrode plate

A copper foil having a thickness of 8 µm was used as a negative electrode current collector.

A negative electrode active material graphite, a styrene-butadiene rubber (SBR) binder, a sodium carboxymethyl cellulose (CMC-Na) thickener and a carbon black (Super P) conductive agent were well stirred in an appropriate amount of solvent deionized water at a weight ratio of 96.2:1.8:1.2:0.8 to form uniform negative electrode slurry. The negative electrode slurry was uniformly coated onto the surface of a negative electrode current collector copper foil, and drying and cold pressing were performed to obtain a negative electrode plate.

### 3. Separator

A porous polyethylene (PE) film was used as a separator.

### 4. Preparation of electrolyte

In an environment where the water content was less than 10 ppm, nonaqueous organic solvents ethylene carbonate (EC) and diethyl carbonate (DMC) were mixed at a volume ratio of 1:1 to obtain an electrolyte solvent. Then, a lithium salt was mixed with the mixed solvent to prepare an electrolyte having a lithium salt concentration of 1 mol/L.

### 5. Preparation of battery cell

The above-mentioned positive electrode plate, separator, and negative electrode plate were laminated sequentially, so that the separator was located between the positive electrode plate and the negative electrode plate for isolation. Then winding was performed to obtain an electrode assembly. The electrode assembly was placed into an outer packaging shell and dried. Then the electrolyte was injected. Procedures such as vacuum encapsulation, standing, formation, and shaping were performed to obtain a lithium-ion battery.

### Comparative Example 1

A lithium-ion battery was prepared by using a method similar to that in Example 1, except that the preparation of the positive electrode plate includes the following steps:

An aluminum foil having a thickness of 12 µm was used as a positive electrode current collector.

A transition metal oxide, a carbon black conductive agent and a polyvinylidene fluoride (PVDF) binder were well stirred at a weight ratio of 80:10:10 in an appropriate amount of solvent N-methylpyrrolidone (NMP) to form uniform positive electrode slurry. The positive electrode slurry was uniformly coated onto the surface of a positive electrode current collector aluminum foil, and drying and cold pressing were performed to obtain a positive electrode plate. The weight-average molecular weight of the PVDF was 71000 Da.

### Comparative Example 2

A lithium-ion battery was prepared by using a method similar to that in Example 1, except that the preparation of the positive electrode plate includes the following steps:

An aluminum foil having a thickness of 12 µm was used as a positive electrode current collector.

A transition metal oxide, a carbon black conductive agent, polysiloxane and a polyvinylidene fluoride (PVDF) binder were stirred at a weight ratio of 80:10:7:3 in an appropriate amount of solvent N-methylpyrrolidone (NMP) to form uniform positive electrode slurry. The positive electrode slurry was uniformly coated onto the surface of a positive electrode current collector aluminum foil, and drying and cold pressing were performed to obtain a positive electrode plate.

### Example 2-1 to Example 2-7

A lithium-ion battery was prepared by using a method similar to that in Example 1, except that at least one of the type of a silane monomer and the type of polysiloxane was adjusted in the preparation process of a positive electrode plate.

### Example 3

A lithium-ion battery was prepared by using a method similar to that in Example 1, except that polyvinylidene fluoride was not added in the preparation process of a positive electrode plate, and the preparation of the positive electrode plate includes the following steps:

An aluminum foil having a thickness of 12 µm was used as a positive electrode current collector.

A silane monomer derivative and a transition metal oxide were added to solvent N-methylpyrrolidone (NMP) and well stirred to form a first intermediate system.

Then the polysiloxane, the conductive carbon black, and the NMP were added to the first intermediate system under stirring to form a second intermediate system. The second intermediate system is used as the positive electrode slurry. A cross-linking reaction occurs between the polysiloxane and the silane monomer derivative to form a silicon-containing polymer, and the silicon-containing polymer is coated on the surface of the transition metal oxide.

The positive electrode slurry was uniformly coated onto the surface of a positive electrode current collector aluminum foil, and drying and cold pressing were performed to obtain a positive electrode plate.

In each step of forming the positive electrode slurry, the stirring time was 120 s, and the stirring speed was 1530 rpm.

The mass ratio of the positive electrode active material to the conductive carbon black to the silicon-containing polymer was 80:10:10.

The mass ratio of the silane monomer derivative to the polysiloxane is 1: 12.8.

### Example 4-1 to Example 4-3

A lithium-ion battery was prepared by using a method similar to that in Example 1, except that the volume average particle size Dv50 of a transition metal oxide was adjusted in the preparation process of a positive electrode plate.

### Example 5-1 to Example 5-3

A lithium-ion battery was prepared by using a method similar to that in Example 1, except that the material of a transition metal oxide was adjusted in the preparation process of a positive electrode plate.

### Example 6-1 to Example 6-3

A lithium-ion battery was prepared by using a method similar to that in Example 1, except that the stirring conditions were adjusted in the preparation process of a positive electrode plate.

### Example 7

A lithium-ion battery was prepared by using a method similar to that in Example 1, except that the addition order of a silane monomer derivative and polysiloxane was adjusted in the preparation process of a positive electrode plate, and the specific steps were as follows:

An aluminum foil having a thickness of 12 µm was used as a positive electrode current collector.

Polysiloxane and a transition metal oxide were added to solvent N-methylpyrrolidone (NMP) and well stirred to form a first intermediate system.

Then a silane monomer derivative, a conductive carbon black and the NMP to the first intermediate system were added with stirring to form a second intermediate system, where the polysiloxane and the silane monomer derivative underwent a cross-linking reaction to form a silicon-containing polymer, and the silicon-containing polymer was coated on the surface of the transition metal oxide.

Subsequently, the polyvinylidene fluoride (PVDF) was added to the second intermediate system and stirred to form positive electrode slurry.

The positive electrode slurry was uniformly coated onto the surface of a positive electrode current collector aluminum foil, and drying and cold pressing were performed to obtain a positive electrode plate.

In each step of forming the positive electrode slurry, the stirring time was 120 s, and the stirring speed was 1530 rpm.

The mass ratio of the positive electrode active material to the conductive carbon black to the silicon-containing polymer was 80:10:7.

The mass ratio of the silane monomer derivative to the polysiloxane to the polyvinylidene fluoride was 0.5:6.5:3.

Relevant parameters of Examples and Comparative Examples are as shown in Table 1.

### Test section

### 1. Test of cycle performance of lithium-ion battery

At 45°C, a charge and discharge cycle test was conducted on a lithium-ion battery at a rate of 0.5C/1C within a voltage range of 2.5 V to 4.4 V. Taking the first discharge capacity as 100%, the capacity retention rate after 300 cycles was calculated. Capacity retention rate (%) of the battery after 300 cycles = (discharge capacity at the 300^{th} cycle) / first discharge capacity × 100%.

### 2. Test of DC resistance of lithium-ion battery

At 45°C, a lithium battery was charged to 4.4 V at a constant current of 0.5 C and then charged to a current of 1C at a constant voltage of 4.4 V. After standing for 5 min, the voltage V1 was recorded. Then, the lithium battery was discharged for 30 s at 0.05 C, and the voltage V2 was recorded, then the internal resistance DCR1 of the battery after the first cycle was calculated as (V2-V1)/(1C).

The above-mentioned steps were repeated for the above-mentioned same battery, and meanwhile, the internal resistance DCRn (n=1, 2, 3... 300) of the battery after the n^{th} cycle was recorded. With the 300 point values of the above-mentioned DCR1, DCR2, DCR3... DCR300 as the Y-coordinate and a corresponding number of cycles as the X-coordinate, a graph of the discharge DCR of the battery versus the number of cycles was obtained.

In the testing process, the first cycle corresponded to n = 1, the second cycle corresponded to n = 2,... and the 300th cycle corresponded to n = 300. The increase ratio of the battery internal resistance = (DCRn-DCR1)/DCR1*100%.

### Test results

The test results are shown in Table 1.

**Table 1**

| Items | Positive electrode active material | | | | | | | | (Stirring time/s)/ (Stirring speed/ rpm) | Lithium ion battery performance | |
|---|---|---|---|---|---|---|---|---|---|---|---|
| | Transition metal oxide | | Coating layer | | | | | | | DC resistance ratio % | Capacity retention rate % after 300 cycles (cls) |
| | Material | Dv50 /µm | Silane monomer derivative | | Polysiloxane | | | Positive electrode binder | | | |
| | | | Material | Mass percentage content % | Material | Weight-average molecular weight/Da | Mass percentage content % | Mass percentage content % | | | |
| Example 1 | LiNi_{0.8}Co_{0.1}Mn_{0.1}O₂ | 4.0 | Formula (I-4) | 0.50 | Formula (II-1) | 110000 | 6.5 | 3 | 120/1530 | 82.1 | 94.2 |
| Example 2-1 | LiNi_{0.8}Co_{0.1}Mn_{0.1}O₂ | 4.0 | Formula (I-1) | 0.50 | Formula (II-1) | 110000 | 6.5 | 3 | 120/1530 | 83.3 | 93.9 |
| Example 2-2 | LiNi_{0.8}Co_{0.1}Mn_{0.1}O₂ | 4.0 | Formula (I-5) | 0.50 | Formula (II-1) | 110000 | 6.5 | 3 | 120/1530 | 82.4 | 94.0 |
| Example 2-3 | LiNi_{0.8}Co_{0.1}Mn_{0.1}O₂ | 4.0 | Formula (I-8) | 0.50 | Formula (II-1) | 110000 | 6.5 | 3 | 120/1530 | 83.5 | 93.8 |
| Example 2-4 | LiNi_{0.8}Co_{0.1}Mn_{0.1}O₂ | 4.0 | Formula (I-11) | 0.50 | Formula (II-1) | 110000 | 6.5 | 3 | 120/1530 | 83.7 | 93.3 |
| Example 2-5 | LiNi_{0.8}Co_{0.1}Mn_{0.1}O₂ | 4.0 | Formula (I-4) | 0.50 | Formula (II-3) | 150000 | 6.5 | 3 | 120/1530 | 83.3 | 93.7 |
| Example 2-6 | LiNi_{0.8}Co_{0.1}Mn_{0.1}O₂ | 4.0 | Formula (I-4) | 0.50 | Formula (II-5) | 125000 | 6.5 | 3 | 120/1530 | 83.1 | 93.4 |
| Example 2-7 | LiNi_{0.8}Co_{0.1}Mn_{0.1}O₂ | 4.0 | Formula (I-4) | 0.50 | Formula (II-6) | 100000 | 6.5 | 3 | 120/1530 | 82.7 | 94.0 |
| Example 3 | LiNi_{0.8}Co_{0.1}Mn_{0.1}O₂ | 4.0 | Formula (I-4) | 0.72 | Formula (II-1) | 110000 | 9.28 | 0 | 120/1530 | 86.5 | 92.3 |
| Example 4-1 | LiNi_{0.8}Co_{0.1}Mn_{0.1}O₂ | 3.5 | Formula (I-4) | 0.50 | Formula (II-1) | 110000 | 6.5 | 3 | 120/1530 | 82.4 | 94.0 |
| Example 4-2 | LiNi_{0.8}Co_{0.1}Mn_{0.1}O₂ | 4.5 | Formula (I-4) | 0.50 | Formula (II-1) | 110000 | 6.5 | 3 | 120/1530 | 82.2 | 94.1 |
| Example 4-3 | LiNi_{0.8}Co_{0.1}Mn_{0.1}O₂ | 5.0 | Formula (I-4) | 0.50 | Formula (II-1) | 110000 | 6.5 | 3 | 120/1530 | 82.8 | 93.7 |
| Example 5-1 | LiNi_{1/3}Co_{1/3}Mn_{1/3}O₂ | 4.0 | Formula (I-4) | 0.50 | Formula (II-1) | 110000 | 6.5 | 3 | 120/1530 | 86.0 | 92.8 |
| Example 5-2 | LiNi_{0.5}Co_{0.2}Mn_{0.3}O₂ | 4.0 | Formula (I-4) | 0.50 | Formula (II-1) | 110000 | 6.5 | 3 | 120/1530 | 85.1 | 93.5 |
| Example 5-3 | LiNi_{0.5}Co_{0.3}Mn_{0.2}O₂ | 4.0 | Formula (I-4) | 0.50 | Formula (II-1) | 110000 | 6.5 | 3 | 120/1530 | 84.6 | 94.0 |
| Example 6-1 | LiNi_{0.8}Co_{0.1}Mn_{0.1}O₂ | 4.0 | Formula (I-4) | 0.50 | Formula (II-1) | 110000 | 6.5 | 3 | 150/1530 | 84.1 | 93.6 |
| Example 6-2 | LiNi_{0.8}Co_{0.1}Mn_{0.1}O₂ | 4.0 | Formula (I-4) | 0.50 | Formula (II-1) | 110000 | 6.5 | 3 | 180/1530 | 84.5 | 93.4 |
| Example 6-3 | LiNi_{0.8}Co_{0.1}Mn_{0.1}O₂ | 4.0 | Formula (I-4) | 0.50 | Formula (II-1) | 110000 | 6.5 | 3 | 120/1800 | 86.5 | 92.7 |
| Example 7 | LiNi_{0.8}Co_{0.1}Mn_{0.1}O₂ | 4.0 | Formula (I-4) | 0.50 | Formula (II-1) | 110000 | 6.5 | 3 | 120/1530 | 92.3 | 92.5 |
| Comparative Example 1 | LiNi_{0.8}Co_{0.1}Mn_{0.1}O₂ | 4.0 | None | None | None | None | None | 10 | 120/1530 | 100 | 91.1 |
| Comparative Example 2 | LiNi_{0.8}Co_{0.1}Mn_{0.1}O₂ | 4.0 | None | None | Formula (II-1) | 110000 | 7.0 | 3 | 120/1530 | 95.1 | 91.3 |

The percentage mass content of each substance in Table 1 can be calculated based on the total mass of the positive electrode film layer.

For example, the percentage mass content of the silane monomer derivative is the ratio of the addition amount of the silane monomer derivative to the total mass of the positive electrode film layer. The percentage mass content of the polysiloxane is the ratio of the addition amount of the polysiloxane to the total mass of the positive electrode film layer. The percentage mass content of the positive electrode additive is the ratio of the addition amount of the positive electrode additive to the total mass of the positive electrode film layer.

The DC resistance of Comparative Example 1 was used as a calculation benchmark, that is, 100%. In other examples, calculation is performed by taking the DC resistance of Comparative Example 1 as a benchmark.

The positive electrode plate in Example 1 was observed by using a transmission electron microscope (TEM) and an X-photoelectron spectroscopy (XPS) tests.

As shown in FIG. 7, the left side of FIG. 7 is a TEM image of Comparison Example 1, and the right side of FIG. 7 is a TEM image of Example 1. A layered coating can be clearly seen from an elliptic region of the TME image on the right side of FIG. 7. It can be seen that the silicon-containing polymer MPDMS and PVDF form a good layered coating on the surface of a material.

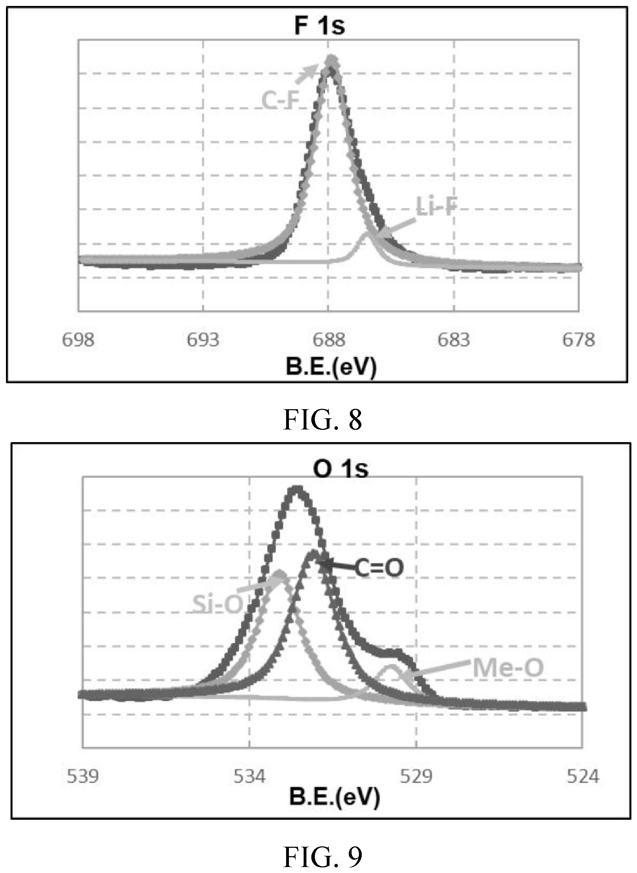

As shown in FIG. 8 to FIG. 10, the X-coordinate of an XPS spectrum is electron binding energy, and the XPS spectrum has a C-F bond, a Si-O bond, a C=O bond, a transition metal element Me-O bond, and an Si-C bond. Due to the existence of the Si-O bond, it is confirmed that the MPDMS can be effectively coated on a transition metal oxide material.

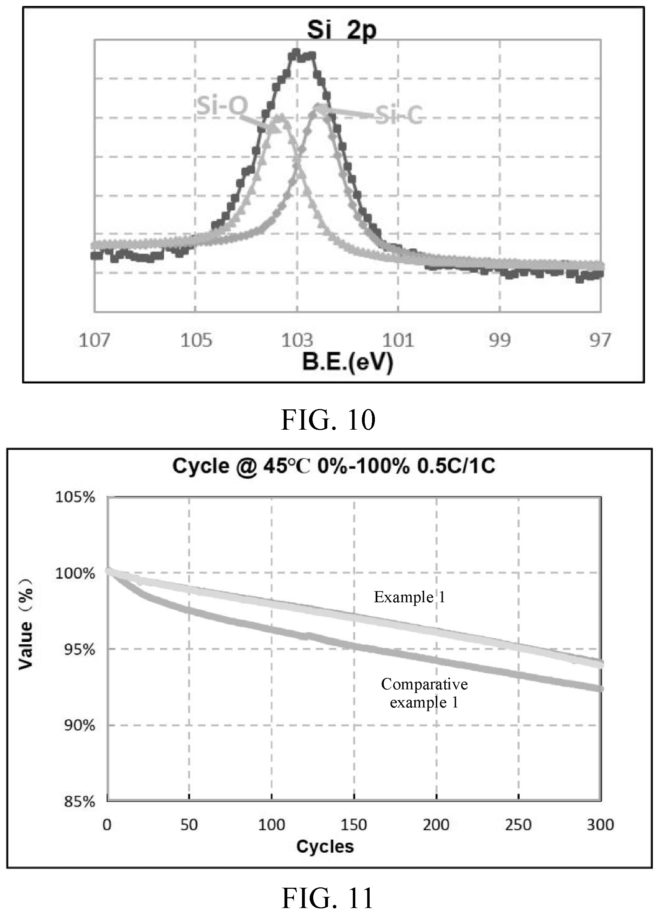

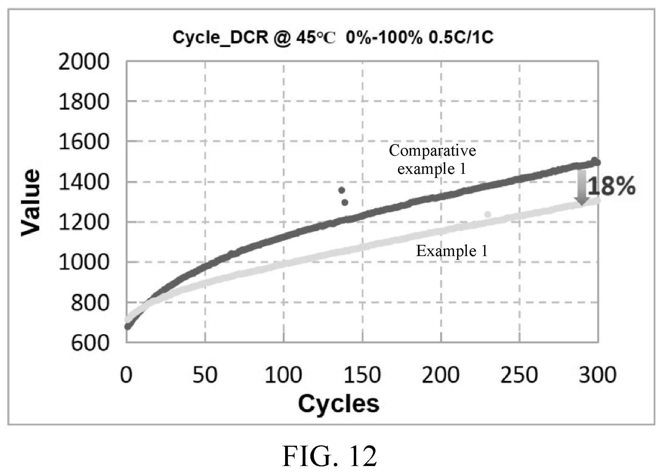

In FIG. 11, the X-coordinate is the number of cycles, and the Y-coordinate is a capacity retention rate value (%). In FIG. 12, the X-coordinate is the number of cycles, and the X-coordinate is the capacity of a lithium-ion battery. As shown in FIG. 11 and FIG. 12, at 45°C, a charge-discharge cycle test is performed on the lithium-ion batteries of Example 1 and Comparative Example 1 within a range of 0% to 100% depth of discharge (DOD) within a voltage range of 2.5 to 4.4 V at a rate of 0.5 C/1C. The capacity retention rate at 300 cycles is 94.2% in Example 1, and the capacity at 300 cycles fades to 92.1% in Comparative Example 1. The ratio of the DC resistance of Example 1 to that of a comparative example is 82%.

It can be seen from Table 1 that the comparison between Comparative Example 1 and an example indicates that an embodiment of the present application, which involves surface coating of the transition metal oxides, can improve the power performance and the cycle performance of the lithium-ion battery.

It can be seen from Example 1 that, when methyltrimethoxysilane (MTMS) and polydimethylsiloxane (PDMS) are preferentially added sequentially as raw materials for a composite binder, and linear bonding with PVDF is performed last, the DC resistance can be reduced by about 40%. The performance of the transition metal oxide can be adjusted to some extent by replacing with the materials of the silane monomer derivative and the polysiloxane. Moreover, the particle size and the material of the transition metal oxide may also have some impact on the performance after coating.

It can be seen from Comparative Example 1 and Example 7 that, while maintaining the selection of the raw materials and the mixing mass ratio of the binder unchanged, the feeding order of the silane monomer derivative and the polysiloxane is changed, that is, the polysiloxane is added first, followed by well stirring and then the silane monomer derivative is added. The feeding order will affect the coating effect to some extent, and the performance of the transition metal oxide can be better improved by preferentially adding the silane monomer derivative.

Although illustrative embodiments have been shown and described, those skilled in the art should understand that the above-mentioned embodiments should not be construed as limitations on the present application, and that changes, substitutions and modifications may be made to the embodiments without departing from the spirit, principles and scope of the present application.

## Claims

1. A positive electrode active material, comprising:
a transition metal oxide; and
a coating layer, coated on at least part of the surface of the transition metal oxide, the coating layer comprising a silicon-containing polymer, the silicon-containing polymer being formed by polymerizing a silane monomer derivative containing a first group and polysiloxane containing a second group, the first group being reactive with the second group, and the molecular weight of the silane monomer derivative being less than that of the polysiloxane.

2. The positive electrode active material according to claim 1, wherein the silane monomer derivative comprises a compound represented by Formula (I): 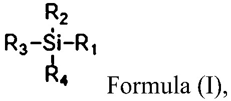 in Formula (I),
R₁, R₂, R₃ and R₄ each independently comprise at least one of a first group, a hydrogen atom, a halogen atom, substituted or unsubstituted C1-C6 alkyl, substituted or unsubstituted C2-C6 alkenyl, substituted or unsubstituted C2-C6 alkynyl and substituted or unsubstituted C6-C10 aryl, wherein at least one of R₁, R₂, R₃ and R₄ comprises the first group.

3. The positive electrode active material according to claim 2, wherein R₁, R₂, R₃ and R₄ each independently comprise at least one of a first group, a hydrogen atom, a halogen atom, substituted or unsubstituted C1-C3 alkyl, substituted or unsubstituted C2-C4 alkenyl, substituted or unsubstituted C2-C4 alkynyl and substituted or unsubstituted C6-C8 aryl, wherein at least one of R₁, R₂, R₃ and R₄ comprises the first group.

4. The positive electrode active material according to claim 2 or 3, wherein the first group comprises at least one of substituted or unsubstituted C1-C6 alkoxyl, amino, carboxyl, hydroxyl, and an ester group.

5. The positive electrode active material according to any one of claims 2 to 4, wherein the silane monomer derivative comprises at least one of a compound represented compounds represented by Formula (I-1) to Formula (I-12):

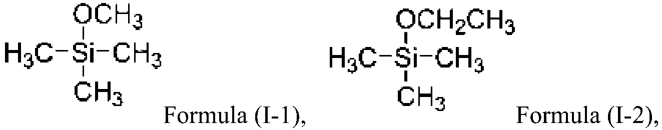

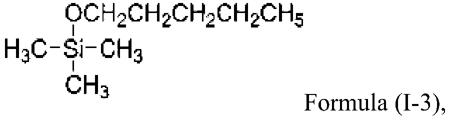

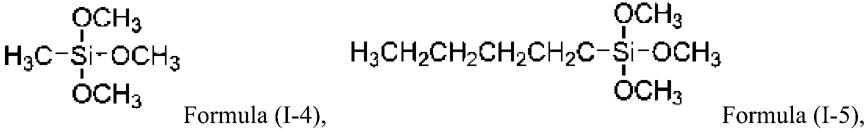

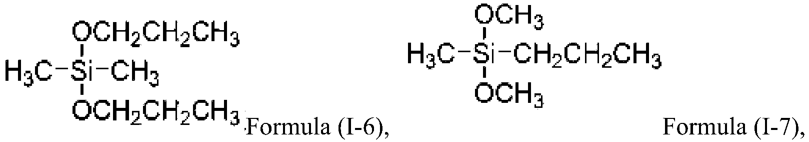

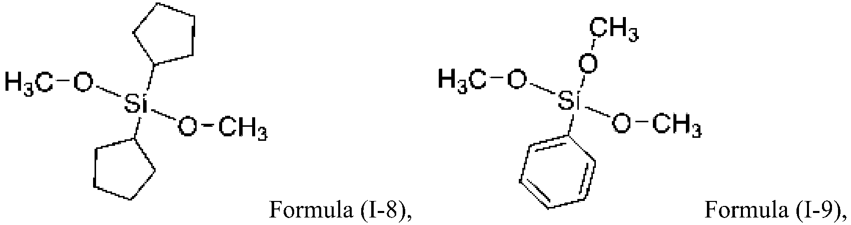

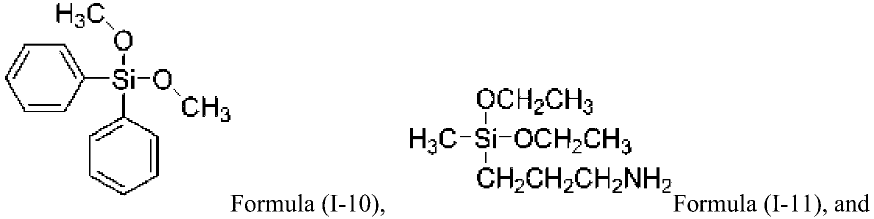

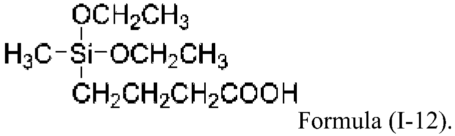

6. The positive electrode active material according to any one of claims 1 to 5, wherein the relative molecular mass of the silane monomer derivative is 65 to 400.

7. The positive electrode active material according to any one of claims 1 to 6, wherein the polysiloxane comprises a compound represented by Formula (II): 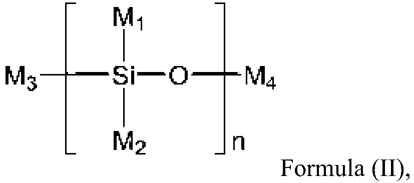 in Formula (II),
n represents degree of polymerization, and n is a positive integer selected from 2 to 50;
M₁, M₂, M₃ and M₄ each independently comprise at least one of a second group, a hydrogen atom, a halogen atom, substituted or unsubstituted C1-C6 alkyl, substituted or unsubstituted C2-C6 alkenyl, substituted or unsubstituted C2-C6 alkynyl and substituted or unsubstituted C6-C10 aryl, and at least one of M₁, M₂, M₃ and M₄ comprises the second group.

8. The positive electrode active material according to claim 7, wherein M₁, M₂, M₃ and M₄ each independently comprise at least one of a second group, a hydrogen atom, a halogen atom, substituted or unsubstituted C1-C3 alkyl, substituted or unsubstituted C2-C4 alkenyl, substituted or unsubstituted C2-C4 alkynyl and substituted or unsubstituted C6-C8 aryl.

9. The positive electrode active material according to claim 7 or 8, wherein
the second group comprises at least one of hydroxyl, alkenyl, amino, an ether group, and a halogen atom.

10. The positive electrode active material according to any one of claims 7 to 9, wherein the polysiloxane comprises at least one of compounds represented by Formula (II-1) to Formula (II-6):

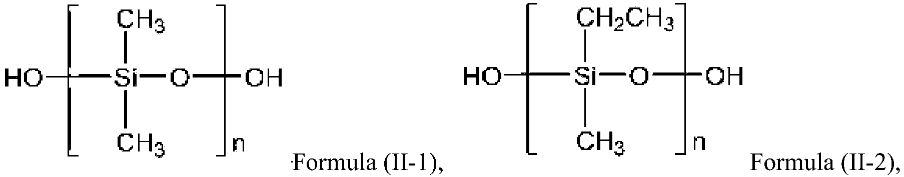

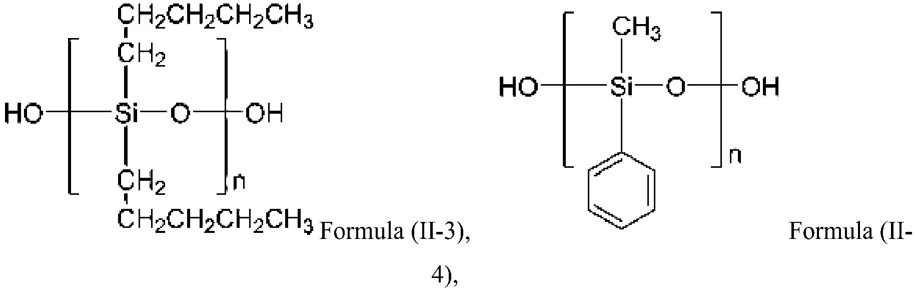

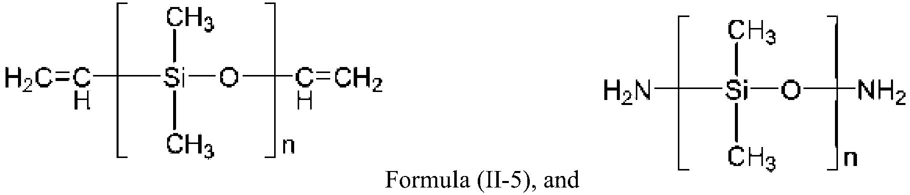

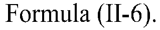

11. The positive electrode active material according to any one of claims 1 to 10, wherein
the weight-average molecular weight of the polysiloxane is 1×10³ Da to 1×10⁶ Da.

12. The positive electrode active material according to any one of claims 1 to 11, wherein the positive electrode active material further satisfies at least one of the following conditions:
(1) the volume average particle size Dv50 of the positive electrode active material is 2.5 µm to 5 µm;
(2) the volume average particle size Dv50 of the transition metal oxide is 2.5 µm to 5 µm;
(3) the thickness of the coating layer is 1 nm to 100 nm;
(4) based on the total mass of the positive electrode active material, the percentage mass content of the coating layer is 0.1% to 5%; and
(5) based on the total mass of the positive electrode active material, the ratio of the percentage mass content of the silane monomer derivative to the percentage mass content of the polysiloxane is (0.07 to 7):1.

13. The positive electrode active material according to any one of claims 1 to 12, wherein the coating layer further comprises at least one of an olefin polymer and an acrylate polymer.

14. The positive electrode active material according to any one of claims 1 to 13, wherein the transition metal oxide comprises a compound with a molecular formula of LiₐNi_{b}Co_{c}Me_{d}Oₑ and a modified compound thereof, Me comprises at least one of Mn, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; 0.8≤a≤1.2, 0.3≤b<1, 0<c<1, 0<d<1, 1<e<6, and b+c<1.

15. The positive electrode active material according to claim 14, wherein Me comprises at least one of Mn, Al, Mg, Fe, Zn, and Cu.

16. The positive electrode active material according to claim 14 or 15, wherein the transition metal oxide comprises one or more of LiNi_{1/3}Co_{1/3}Mn_{1/3}O₂, LiNi_{0.8}Co_{0.1}Mn_{0.1}O₂, LiNi_{0.6}Co_{0.1}Mn_{0.3}O₂, LiNi_{0.6}Co_{0.2}Mn_{0.2}O₂, LiNi_{0.5}Co_{0.3}Mn_{0.2}O₂, LiNi_{0.84}Co_{0.11}Al_{0.05}O₂, and LiNi_{0.86}Co_{0.11}Al_{0.03}O2.

17. A preparation method for a positive electrode active material, the preparation method comprising:
providing a transition metal oxide;
providing a silane monomer derivative to the transition metal oxide such that the silane monomer derivative is coated on at least part of the surface of the transition metal oxide, wherein the silane monomer derivative comprises a first group; and
providing polysiloxane to the silane monomer derivative, the polysiloxane undergoing a cross-linking reaction that occurs between a second group contained in the polysiloxane and the first group to form a silicon-containing polymer, and the silicon-containing polymer being coated on at least part of the surface of the transition metal oxide, wherein the molecular weight of the polysiloxane is greater than that of the silane monomer derivative.

18. A positive electrode plate, comprising a positive electrode current collector and a positive electrode film layer arranged on at least one side of the positive electrode current collector, the positive electrode film layer comprising the positive electrode active material according to any one of claims 1 to 16, or the positive electrode active material prepared by the method according to claim 17.

19. A battery, comprising the positive electrode plate according to claim 18.

20. An electrical apparatus, comprising the battery according to claim 19.
